# EUROPEAN PATENT SPECIFICATION

(11) **EP 4 686 255 B1**
(45) Date of publication and mention of the grant of the patent: **26.08.2026**
(21) Application number: 24758436.0
(22) Date of filing: 12.06.2024
(51) Int. Cl.: H04W 24/10, H04W 4/30, H04W 4/33, H04W 4/38

(54) **SENSING METHOD AND APPARATUS, AND SENSING DEVICE, SENSING SERVER AND STORAGE MEDIUM**
ERFASSUNGSVERFAHREN, VORRICHTUNG, ERFASSUNGSVORRICHTUNG, ERFASSUNGSSERVER UND SPEICHERMEDIUM
PROCÉDÉ ET APPAREIL DE DÉTECTION, ET DISPOSITIF DE DÉTECTION, SERVEUR DE DÉTECTION ET SUPPORT DE STOCKAGE

(43) Date of publication of application: 28.01.2026
(73) Proprietor: New H3C Technologies Co., Ltd., Hangzhou, Zhejiang 310052 (CN)
(72) Inventor: KONG, Lei, Beijing 100102 (CN); ZHU, Zhiyuan, Beijing 100102 (CN); WU, Nan, Beijing 100102 (CN)
(74) Representative: IPAZ
(86) International application number: PCT/CN2024/098567
(87) International publication number: WO 2025/255729

(56) References cited:
- WO-A1-2023/092356
- WO-A1-2023/115286
- WO-A1-2023/186089
- CN-A- 116 193 500
- CN-A- 117 320 053
- CN-A- 117 528 444
- CN-A- 117 880 872
- US-A1- 2024 183 936
- US-A1- 2025 056 284

## Description

### Technical field

The present disclosure relates to the technical field of communications, and in particular to a sensing method, a sensing device, and a sensing server.

### Background

Wireless Local Area Network (WLAN) sensing is a technology that performs sensing tasks with Wireless Fidelity (WiFi) signals. WiFi radio waves can reflect, penetrate and bend on the surface of objects during propagation. After being properly processed, a WiFi signal can be used to sense a surrounding environment, detect obstacles and explain the movement of a target. WLAN sensing technology can be applied to a variety of residential, corporate, indoor and outdoor applications. For example, WLAN sensing technology can be used for gesture control, fall detection, tracking, imaging, activity recognition, vital sign monitoring and so on.

At present, the sensing method between an Access Point (AP) and a station (STA) during WLAN sensing has been specified. But during actual applications, it is necessary to realize end-to-end sensing. That is, it is necessary to realize an end-to-end sensing service through an interaction between a sensing Application (APP), a sensing server, the AP and the STA, so as to realize a sensing function of the sensing APP. But there is no well-developed end-to-end sensing method at present.

US2024/183936A1 discloses methods, system and devices for performing wireless sensing measurement and reporting. Methods, apparatus and systems for wireless sensing are described. In one example, a described system in a wireless data communication network comprises: a transmitter configured to transmit a time series of at least one wireless sounding signal (WSS) based on a standard wireless network protocol associated with the wireless data communication network, and a receiver. The wireless data communication network comprises a physical (PHY) layer, a medium access control (MAC) layer, and at least one higher layer. The receiver is configured to: receive the time series of at least one WSS (TSWSS) based on the standard wireless network protocol through a wireless channel of a venue, and perform a plurality of wireless sensing measurements based on the received TSWSS to obtain sensing measurement results based on the standard wireless network protocol. The PHY layer or the MAC layer of the receiver provides the sensing measurement results locally to the at least one higher layer of the receiver based on the standard wireless network protocol. The sensing measurement results are available to the at least one higher layer of the receiver for performing a sensing-based task based on the sensing measurement results.

WO2023/115286A1 discloses method and apparatus for terminating proxy in WLAN sensing measurement, and electronic device and storage medium. The embodiments of the present disclosure relate to the technical field of mobile communications. Provided are a method and apparatus for terminating a proxy in WLAN sensing measurement, and an electronic device and a storage medium. The method for terminating a proxy in WLAN sensing is applied to a proxy access point (AP) device. The method comprises: determining sensing measurement identification information of a wireless local area network (WLAN) sensing measurement, wherein the sensing measurement identification information comprises a sensing session identifier and/or a sensing measurement establishment identifier; and terminating a proxy in the WLAN sensing measurement corresponding to the sensing measurement identification information. Provided in the embodiments of the present disclosure is a method for terminating a proxy during the process of an AP initiating a sensing measurement as a proxy for an STA.

US2025/056284A1 discloses method and apparatus for terminating proxy of WLAN sensing, and electronic device and storage medium. A method for terminating a proxy of wireless local area network (WLAN) sensing is performed by a proxy access point (AP). The method includes: determining sensing measurement identification information of a WLAN sensing measurement, wherein the sensing measurement identification information includes at least one of a sensing session identification or a sensing measurement establishment identification; and terminating a proxy of the WLAN sensing measurement corresponding to the sensing measurement identification information.

### Summary

In view of this, the present disclosure provides a sensing method, an apparatus, a sensing device, a sensing server and a storage medium, to provide an end-to-end sensing method.

The invention is set out in the appended set of claims.

By adopting the above technical solutions, an end-to-end sensing process between the sensing device, the designated AP, the designated STA(s) and the sensing server is realized, which provides process guidance for the establishment of the sensing service and contributes to the landing and popularization of the WiFi sensing service.

### Brief Description of the Drawings

The accompanying drawings described herein are to provide further understanding of the present disclosure and constitute a part of the present disclosure.
Fig. 1 is a schematic diagram of a sensing process between an AP and an STA;
Fig. 2 is a schematic diagram of a WiFi sensing service framework provided by an example of the present disclosure;
Fig. 3 is a flowchart of a sensing method provided by an example of the present disclosure;
Fig. 4 is a flowchart of another sensing method provided by an example of the present disclosure;
Fig. 5 is a flowchart of yet another sensing method provided by an example of the present disclosure;
Fig. 6 is a flowchart of yet another sensing method provided by an example of the present disclosure;
Fig. 7 is a flowchart of a sensing initialization method provided by an example of the present disclosure;
Fig. 8 is a flowchart of a sensing trigger method provided by an example of the present disclosure;
Fig. 9 is a flowchart of a sensing termination method provided by an example of the present disclosure;
Fig. 10a is a schematic diagram of a message structure provided by an example of the present disclosure;
Fig. 10b is a schematic diagram of another message structure provided by an example of the present disclosure;
Fig. 11 is a schematic structural diagram of a sensing device provided by an example of the present disclosure;
Fig. 12 is a schematic structural diagram of another sensing device provided by an example of the present disclosure;
Fig. 13 is a schematic structural diagram of a sensing device provided by an example of the present disclosure;
Fig. 14 is a schematic structural diagram of a sensing server provided by an example of the present disclosure.

### Detailed Description

In order to make the purpose, technical solutions and advantages of the present disclosure clearer and more understandable, the present disclosure will be further described in detail with reference to the accompanying drawings and examples.

At present, the Institute of Electrical and Electronics Engineers (IEEE) has revised the standards of Physical layer (PHY) and Media Access Control (MAC) of IEEE 802.11, which has enhanced WLAN sensing ability, improved the reliability and efficiency of WLAN sensing, and made the deployment of WLAN sensing services more convenient.

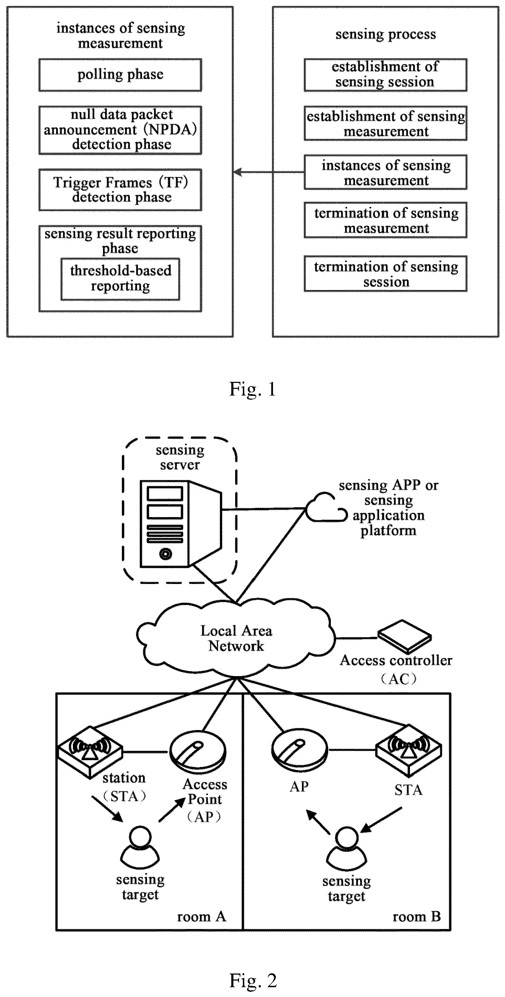

IEEE has specified the sensing processes between an AP and an STA in sub-7GHz and 60GHz bands, which are basically the same. As shown in Fig. 1, the sensing process between an AP and an STA in the sub-7GHz band includes: establishment of a sensing session, establishment of a sensing measurement, an instance of sensing measurement, termination of the sensing measurement and termination of the sensing session. The instance of sensing measurement includes a polling phase, a null data packet announcement (NDPA) detection phase, a Trigger Frames (TF) detection phase and a sensing result reporting phase.

The sensing result reporting phase includes threshold-based reporting, that is, determining whether measurement data satisfy a preset threshold condition, and if yes, performing reporting.

However, at present, the sensing process is only limited between an AP and an STA, and there is no end-to-end sensing process.

For ease of understanding, a possible application scenario in an example of the present disclosure is first introduced.

For example, in a scenario where an enterprise has multiple offices, APs can be installed in different offices to realize wireless communication between different offices, and these APs are managed by a unified Access controller (AC) (or another device with similar functions) in a unified manner. When performing WiFi sensing services, the environment's Channel State Information (CSI) data can be collected through the APs to realize sensing of different offices.

As an example, WiFi sensing can also be applied in scenarios such as homes, schools and hotels.

As shown in Fig. 2, Fig. 2 is an end-to-end WiFi sensing service framework, in which a sensing APP or a sensing application platform, a sensing server, an AC, an AP and an STA are connected via a Local Area Network.

Two rooms are exemplarily shown in Fig. 2 as room A and room B. Both rooms A and B have an STA, an AP and a sensing target. For example, recognition of an activity of the sensing target can be realized, or gesture control of a mart home device by the sensing target can be supported, through WiFi sensing.

STAs and APs in different rooms are connected to the AC, the sensing server and the sensing APP (or the sensing application platform) through a local network.

The sensing APP or the sensing application platform is an initiator of the sensing service, and the sensing server, the APs and the STAs are responders of the sensing service.

It should be noted that the number of devices in Fig. 2 is only an example. Actual implementations are not limited thereto.

In the subsequent examples of the present disclosure, by default, the deployment and configuration of each device in the WiFi sensing service framework have been completed, information synchronization between the sensing APP (or the sensing application platform) and the AC has been completed, and the sensing APP (or the sensing application platform) has been informed of information related to the room(s), the AP(s) and the STA(s) in the current scenarios.

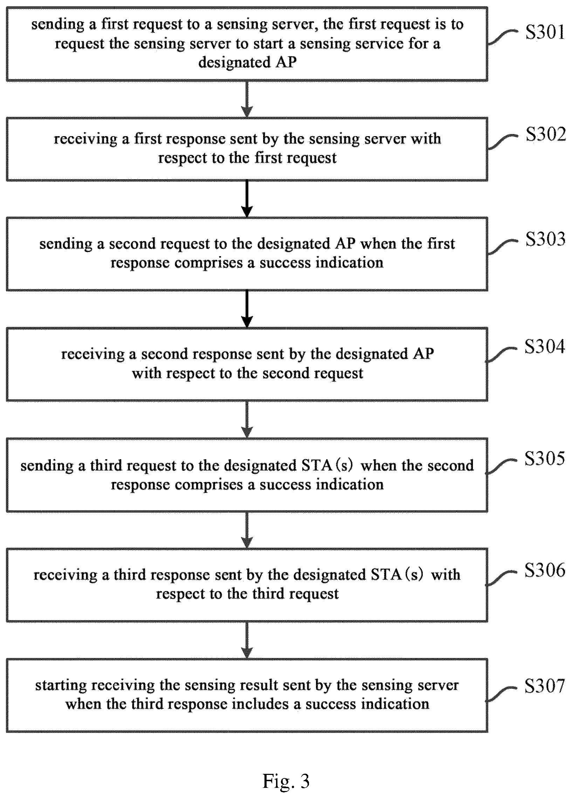

In order to provide an end-to-end sensing process, an example of the present disclosure provides a sensing method applied to a sensing device. The sensing device is a device where a sensing APP or a sensing application platform is located. As shown in Fig. 3, the method includes:
S301: sending a first request to a sensing server, wherein the first request is to request the sensing server to start a sensing service for a designated AP.

The sensing service of the sensing server is to receive measurement data reported by the designated AP and obtain a sensing result based on the measurement data.

The first request includes information of the designated AP.

The information of the designated AP can be information of an AP in a designated room. The designated room can be one room or multiple rooms. For example, the information of the designated AP includes information of an AP in room A and information of an AP in room B in Fig. 2. In this case, the APs in room A and room B are both the designated APs, and the information of the designated AP specifically includes a MAC address of the designated APs and a sampling rate at which the designated APs collect measurement data. Optionally, the measurement data are CSI data. The information of the designated AP is located in room information, and the room information also includes a room ID, a data type of measurement data collected by the designated AP, and a reporting rate at which the sensing server reports a sensing result. In this example, the data type can be NULL data, QoS NULL data or QoS data.

Or, if the designated AP is not bound to a room, the designated AP can be a specific AP unrelated to room information. In this case, the information of the specific AP includes a MAC address of the designated AP, a sampling rate at which the designated AP collects measurement data, and a reporting rate at which the sensing server reports a sensing result.

S302: receiving a first response sent by the sensing server with respect to the first request.

The sensing server can determine the number of designated APs, and determine the total amount of computing resources and storage resources needed for this sensing task based on the amount of computing resources and storage resources needed for sensing measurement data reported by each AP. If its current amount of computing resources is greater than or equal to the total amount of computing resources, and its own current amount of storage resources is greater than or equal to the total amount of storage resources, sensing trigger has succeeded, otherwise sensing trigger has failed.

S303: sending a second request to the designated AP when the first response comprises a success indication.

The second request is to inform the designated AP to start the sensing service, the second request comprises information of a designated STA(s) bound to the designated AP and information of the sensing server, and the sensing service of the designated AP is to, after obtaining the measurement data by performing signal measurement on a sensing signal sent by the designated STA(s), report the measurement data to the sensing server.

After the designated STA(s) sends the sensing signal, it will be reflected by an object. If the sensing signal is transmitted through a sensing target, the sensing target will also reflect the sensing signal and thus the designated AP can receive the sensing signal reflected by the sensing target. It can be understood that, after the sensing signal is reflected by the sensing target, a value of the measurement data measured by the designated AP will be affected, thus allowing the sensing server to determine the sensing result based on the measurement data. As an example, the sensing result may be whether there is a sensing target.

It can be understood that if there are multiple designated APs, the sensing device sends the second request to each designated AP separately.

The second request further includes a sampling rate of measurement data sampled by the designated AP and a data type of measurement data collected.

The information of the designated STA(s) is a MAC address of the designated STA(s) bound to the designated AP, and the information of the sensing server includes an IP address version, an IP address and a port number of the sensing server.

S304: receiving a second response sent by the designated AP with respect to the second request.

S305: sending a third request to the designated STA(s) when the second response comprises a success indication.

The third request is to inform the designated STA(s) to send the sensing signal to the designated AP.

The designated STA(s) and the designated AP in this block have a binding relationship.

S306: receiving a third response sent by the designated STA(s) with respect to the third request.

S307: starting receiving the sensing result sent by the sensing server when the third response comprises a success indication.

After receiving the measurement data reported by the designated AP, the sensing server will execute a sensing algorithm on the measurement data, so as to obtain the sensing result.

The sensing algorithm can be any sensing algorithm in the relevant art and is not limited by the examples of the present application.

By means of this method, an end-to-end sensing process between the sensing device, the designated AP, the designated STA(s) and the sensing server is realized, which provides process guidance for establishment of a sensing service and contributes to landing and popularization of the WiFi sensing service.

Optionally, in the above example, in the event that the first response includes a failure indication, the first response includes a failure reason;
in the event that the second response includes a failure indication, the second response includes a failure reason;
in the event that the third response includes a failure indication, the third response includes a failure reason.

The failure reasons are all expressed in the form of an enumerate field, for example, enumerate {failure reason 1, failure reason 2}.

In the event that any of the above responses includes a failure indication, it can be handled by operation and maintenance personnel. For example, the cause of the failure can be troubleshot, and after the issue that caused the failure has been solved, the sensing trigger process shown in Fig. 1 can be re-initiated by the sensing device.

In some examples of the present disclosure, in the process of performing the sensing service, the sensing APP can also update configuration parameters of the sensing server, the designated AP and/or the designated STA(s), which, specifically, includes the following three cases:
Case 1: after receiving the sensing result sent by the sensing server, the method further comprises:
sending a first update request to the sensing server if information of the designated AP is updated, wherein the first update request includes updated information of the designated AP; receiving a first update response sent by the sensing server with respect to the first update request, wherein the first update response is to indicate whether the sensing server has been updated successfully.

It can be understood that if the sensing server determines that current computing resources and storage resources can meet sensing requirements based on the information of the designated AP, the update has succeeded; otherwise the update has failed.

Case 2: after starting receiving the sensing result sent by the sensing server, the method further comprises:
sending a second update request to the designated AP if information of the designated STA(s) bound to the designated AP or information of the sensing server is updated, wherein the second update request includes updated information of the designated STA(s) bound to the designated AP, and/or updated information of the sensing server; receiving a second update response sent by the designated AP with respect to the second update request, wherein the second update response is to indicate whether the designated AP has been updated successfully.

It can be understood that if the designated AP determines that it has the ability to sense and report measurement data according to configuration information in the second update request, the update has succeeded; otherwise the update has failed.

Case 3: the third request further includes a designated packet sending rate, and the designated STA(s) can send the sensing signal to the designated STA(s) according to the designated packet sending rate. After starting receiving the sensing result sent by the sensing server, the method further comprises:
sending a third update request to the designated STA(s) if the information of the designated AP bound to the designated STA(s) or the designated packet sending rate is updated, wherein the third update request includes updated information of the designated AP bound to the designated STA(s) and/or updated designated packet sending rate; receiving a third update response sent by the designated STA(s) with respect to the third update request, wherein the third update response is to indicate whether the designated STA(s) has been updated successfully.

It can be understood that if the designated STA(s) determines that it has the ability to send the sensing signal according to configuration information in the third update request, the update has succeeded; otherwise the update has failed.

In this way, the sensing device can flexibly update configuration parameters of the sensing server, the designated AP and/or the designated STA(s), and the realization is more flexible and convenient.

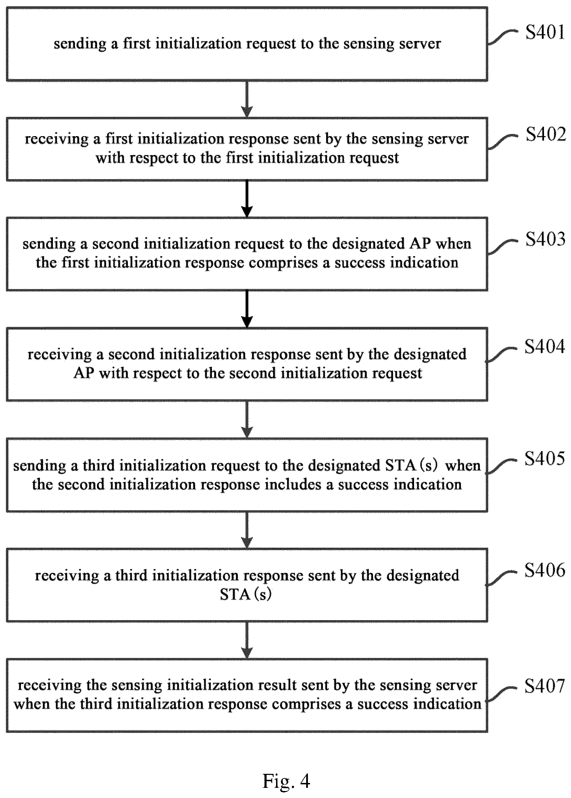

In some examples of the present disclosure, before executing the process shown in Fig. 3, it is necessary to initialize the sensing service, as shown in Fig. 4, which specifically includes the following blocks:
S401: sending a first initialization request to the sensing server.

The first initialization request is to request the sensing server to start a sensing initialization service for the designated AP, and the sensing initialization service of the sensing server is to receive measurement data reported by the designated AP within an initialization time window and obtain a sensing initialization result based on the measurement data.

The first initialization request includes the initialization time window and the information of the designated AP.

S402: receiving a first initialization response sent by the sensing server with respect to the first initialization request.

The sensing server can determine the number of designated APs, and determine the total amount of computing resources and storage resources needed for this sensing task based on the amount of computing resources and storage resources needed for sensing measurement data reported by each AP. If its own current amount of computing resources is greater than or equal to the total amount of computing resources, and its own current amount of storage resources is greater than or equal to the total amount of storage resources, the initialization is determined to have succeeded; otherwise the initialization is determined to have failed.

S403: sending a second initialization request to the designated AP when the first initialization response includes a success indication.

The second initialization request is to inform the designated AP to start the sensing initialization service, the second initialization request comprises information of the designated STA(s) bound to the designated AP and information of the sensing server, and the sensing initialization service of the designated AP is to, after obtaining the measurement data by performing signal measurement on a sensing signal sent by the designated STA(s), report the measurement data to the sensing server.

S404: receiving a second initialization response sent by the designated AP with respect to the second initialization request.

S405: sending a third initialization request to the designated STA(s) when the second initialization response includes a success indication.

The third initialization request is to inform the designated STA(s) to start sending the sensing signal to the designated AP. The third initialization request further includes a designated packet sending rate, to instruct the designated STA(s) to send the sensing signal to the designated AP according to the designated packet sending rate.

S406: receiving a third initialization response sent by the designated STA(s).

S407: receiving the sensing initialization result sent by the sensing server when the third initialization response includes a success indication.

Optionally, in the event that the first initialization response includes a failure indication, the first initialization response includes a failure reason;
in the event that the second initialization response includes a failure indication, the second initialization response includes a failure reason;
in the event that the third initialization response includes a failure indication, the third initialization response includes a failure reason.

The failure reasons are all expressed in the form of an enumeration field, for example, enumerate {failure reason 1, failure reason 2}.

In the event that any of the above initialization responses includes a failure indication, it can be handled by operation and maintenance personnel. For example, the cause of the failure can be troubleshot, and after the issue that caused the failure has been solved, the sensing initialization process can be re-initiated by the sensing device.

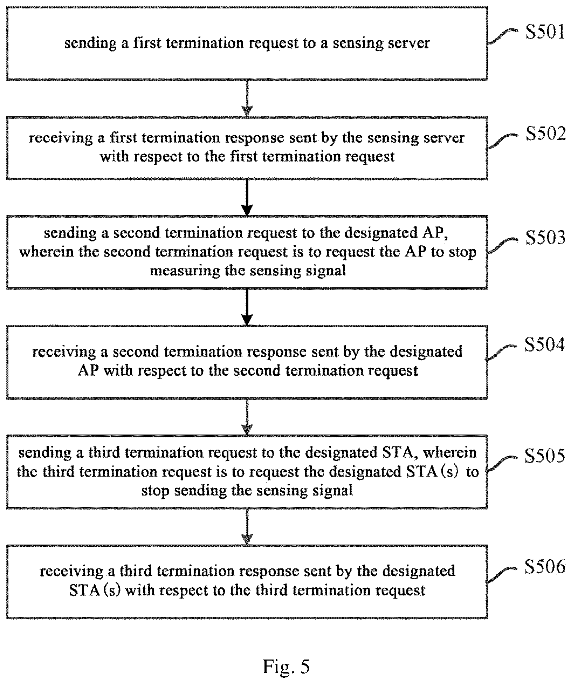

In some examples of the present disclosure, in the process of performing the sensing service, the sensing device can also terminate the sensing service, as shown in Fig. 5, which includes the following blocks:
S501: sending a first termination request to a sensing server.

The first termination request includes the information of the designated AP, and the first termination request is to request the sensing server to terminate sensing the measurement data reported by the designated AP and to terminate reporting the sensing result to the sensing device.

S502: receiving a first termination response sent by the sensing server with respect to the first termination request.

S503: sending a second termination request to the designated AP, wherein the second termination request is to request the AP to stop measuring the sensing signal.

S504: receiving a second termination response sent by the designated AP with respect to the second termination request.

S505: sending a third termination request to the designated STA(s), wherein the third termination request is to request the designated STA(s) to stop sending the sensing signal.

S506: receiving a third termination response sent by the designated STA(s) with respect to the third termination request.

By means of this method, an end-to-end process of terminating the sensing task is specified, which is helpful for landing and popularization of WiFi sensing servers.

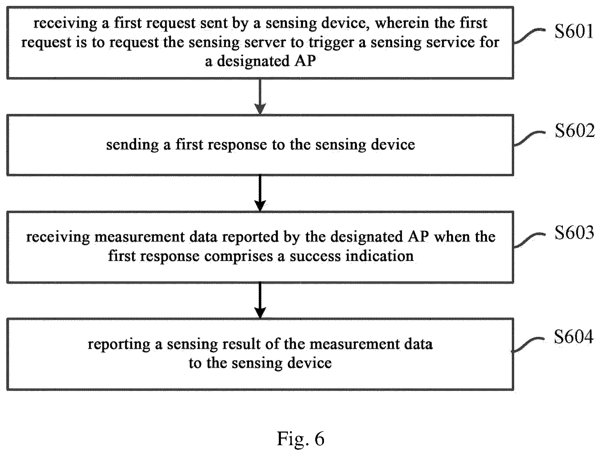

Based on the same inventive concept, the examples of the present disclosure further provide a sensing method, which is applied to a sensing server. As shown in Fig. 6, the method includes:
S601: receiving a first request sent by a sensing device, wherein the first request is to request the sensing server to trigger a sensing service for a designated AP.

Information of the designated AP is included in the first request.

S602: sending a first response to the sensing device.

S603: receiving measurement data reported by the designated AP when the first response includes a success indication.

The designated AP is bound to a designated STA(s), and the measurement data is obtained after the designated AP performs signal measurement on a sensing signal sent by the designated STA(s).

S604: reporting a sensing result of the measurement data to the sensing device.

By means of this method, an end-to-end sensing process between the sensing device, the designated AP, the designated STA(s) and the sensing server is realized, which provides process guidance for establishment of the sensing service and contributes to landing and popularization of WiFi sensing services.

Optionally, after the sensing server reports the sensing result of the measurement data to the sensing device, the method further comprises:
receiving a first update request sent by the sensing device, wherein the first update request includes updated information of the designated AP; sending a first update response to the first update request to the sensing device, wherein the first update response is to indicate whether the sensing server has been updated successfully.

If the information of the designated AP is updated, the sensing device can send the first update request to the sensing server. After receiving the first update request, the sensing server can determine that the update has succeeded if it is determined that the current computing resources and storage resources can meet the sensing requirements according to the updated information of the designated AP, otherwise, it can determine that the update has failed.

In some examples of the present disclosure, before the sensing server executes the sensing process shown in Fig. 6, it is necessary to execute an initialization process, which includes:
Block 1: receiving a first initialization request sent by the sensing device, wherein the first initialization request includes an initialization time window and information of the designated AP.
Block 2: sending a first initialization response to the first initialization request to the sensing device.
Block 3: receiving measurement data sent by the designated AP when the first initialization response includes a success indication, wherein the designated AP is bound to a designated STA(s), and the measurement data is obtained after the designated AP performs signal measurement on a sensing signal sent by the designated STA(s).
Block 4: sending a sensing initialization result of the measurement data to the sensing device.

It can be understood that if the sensing initialization result is success, it can proceeds to the sensing triggering according to the process shown in Fig. 6.

Subsequently, if the sensing service needs to be terminated, the sensing server can receive a first termination request sent by the sensing device, which includes information of the designated AP, and the first termination request is to request the sensing server to terminate sensing the measurement data reported by the designated AP and to terminate reporting the sensing result to the sensing device; sending a first termination response to the first termination request to the sensing device.

The sensing initialization process, the sensing trigger/update process and the sensing termination process comprised in the examples of the present disclosure are described below, respectively, in the form of inter-device interaction.

### I. The sensing initialization process

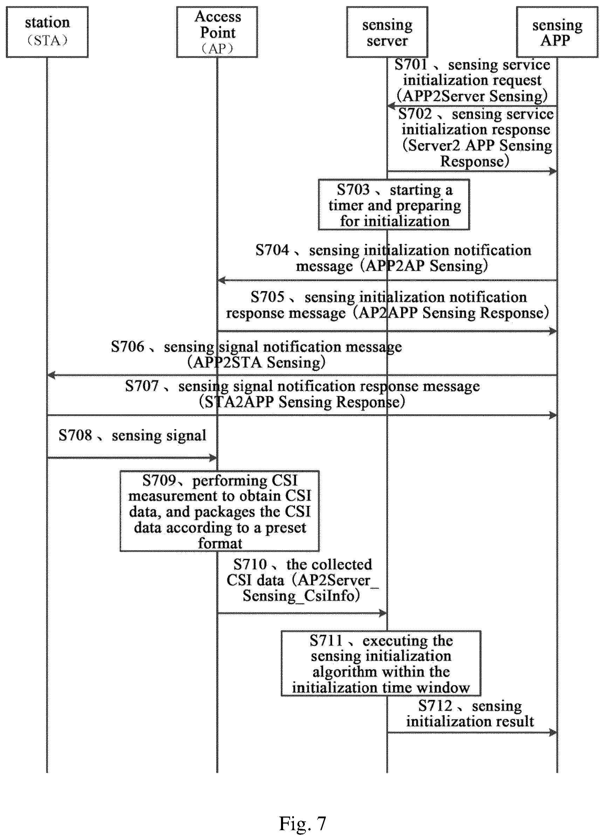

When the establishment of the sensing system is completed, the initialization is started when there is no one in the room. The initialization process is shown in Fig. 7, comprising the following blocks:
S701. the sensing APP sends a sensing service initialization request (APP2Server Sensing) to the sensing server.

The sensing initialization request is the first initialization request in the above examples, and the sensing service initialization request includes information of an AP that needs to perform a sensing task and an initialization time window. The information of the AP can be the information of the AP in a designated room or some designated rooms, or the information of the AP can be the information of a designated AP.

The information of an AP can specifically include a MAC address of the AP and a CSI sampling rate by the AP.

S702: the sensing server returns the sensing service initialization response (Server2 APP Sensing Response) in reply to the sensing APP.

The sensing service initialization response is the first initialization response in the above examples, and after receiving the sensing service initialization request, the sensing server calculates whether its own computing resources and storage resources meet the initialization requirements according to the number of APs that need to perform sensing tasks, and if yes, a response that the initialization has been succeeded is returned; if not, a response that the initialization has failed is returned, and the failure reason is carried in the response.

The computing resources and storage resources needed to perform the sensing service for a single AP are determined in advance. After the sensing server determines the number of APs that need to perform the sensing task, it can determine the total amount of computing resources and total amount of storage resources required based on the amount of computing resources and the amount of storage resources needed for a single AP and the number of APs. If the computing resources of the sensing server are greater than the total amount of computing resources and the storage resources are greater than the total amount of storage resources, it can be determined that the initialization requirements are met, otherwise it is determined that the initialization requirements are not met.

For example, the failure reason can be indicated by a field of enumerate type, that is, enumerate {NotEnoughCP, NotEnoughMemory}, where NotEnoughCP indicates insufficient computing power and NotEnoughMemory indicates insufficient storage space.

S703: the sensing server starts a timer and prepares for initialization.

S704: the sensing APP sends a sensing initialization notification message (APP2AP Sensing) to the AP.

The sensing initialization notification message is the second initialization request in the above examples, and the sensing APP is to send the sensing initialization notification message to each AP performing the sensing task separately, one of the APs is exemplarily shown in Fig. 7.

The sensing initialization notification message includes a data type of specified CSI to be sampled, a CSI sampling rate, information of the sensing server address version and a detailed address, a port number of the sensing server and information of an STA(s) bound to the AP. The information of the STA can specifically be the MAC address of the STA.

S705: The AP sends a sensing initialization notification response message (AP2APP Sensing Response) to the sensing APP.

The sensing initialization notification response message is the second initialization response in the above examples. After receiving the sensing initialization notification message, if the AP determines that it has the ability to measure and report the CSI, it returns a response message of sensing initialization success; if the AP determines that it does not have the ability to measure and report the CSI, it returns a response message of initialization failure, and the response message carries the failure reason.

For example, the failure reason can be indicated by a field of enumerate type, that is, enumerate {NotSupportCSIMeas, NotEnoughResource}, where NotSupportCSIMeas indicates that the AP does not support the ability to measure CSI, and NotEnoughResource indicates that the AP is currently short of resources.

S706: The sensing APP sends a sensing signal notification message (APP2STA Sensing) to the STA.

The sensing signal notification message is the third initialization request in the above examples. The sensing APP needs to send a sensing signal notification message to each STA performing the sensing task separately, one of the STAs is exemplarily shown in Fig. 7.

The sensing signal notification message is to inform the STA to start sending the sensing signal according to the designated packet sending rate, and the sensing signal notification message includes the designated packet sending rate and the MAC address of the AP bound to the STA.

S707: The STA sends a sensing signal notification response message (STA2APP Sensing Response) to the sensing APP.

The sensing signal notification response message is the third initialization response in the above example. After receiving the sensing signal notification message, the STA returns a response message of success if it determines that it has the ability to send the sensing signal; and returns a response message of failure if it determines that it does not have the ability to send the sensing signal, and a failure reason is carried in the response message.

For example, the failure reason can be indicated by a field of enumerate type, that is, enumerate {NotSupportCSI, NotEnoughResource}. Wherein, NotSupportCSIMeas indicates that the STA does not support sending the sensing signal, and NotEnoughResource indicates that the STA is currently short of resources.

S708: The STA sends a sensing signal to the AP.

The STA can send a sensing signal to the AP bound to itself according to the configuration, and the data type of the sensing signal can be Data, QoS Data or NULL Data.

S709: The AP performs CSI measurement to obtain CSI data, and packages the CSI data according to a preset format.

The AP can perform the CSI measurement according to the data type of CSI to be collected by the sensing APP for its own configuration needs, to obtain the CSI data of the data type.

S710: The AP sends the collected CSI data (AP2Server_Sensing_CsiInfo) to the sensing server at a fixed CSI sampling rate.

Optionally, the AP can also send to the sensing server at preset time intervals the CSI data that has been collected multiple times within a preset time interval.

S711: The sensing server executes the sensing initialization algorithm within the initialization time window.

For each AP reporting the CSI data, the sensing server can select available antennas and available sub-carriers of the AP, and determine a sensing judgment threshold, and store it locally.

For example, for each antenna of the AP, the sensing server can calculate the variance of the CSI amplitudes of all sub-carriers of the antenna in an unmanned scene in a period of time, and select N antennas with the smallest variance as available antennas.

Based on a selected available antenna, the variance of the CSI amplitudes of each sub-carrier on the antenna in a period of time is calculated, and M sub-carriers with the smallest variance is selected as the available sub-carriers.

Then, based on the selected available antennas and available sub-carriers, the variances of all CSI amplitudes are averaged, and the average value is taken as the sensing judgment threshold. The sensing judgment threshold is to judge whether there is a sensing target during the sensing service, and reference can be made to related technologies for the specific judgment method, which is not limited by the example of the present disclosure.

The example of the present disclosure does not limit the ways of selecting available antennas and available sub-carriers and determining the sensing judgment threshold, and also adopts other methods in related technologies.

S712: The sensing server sends a sensing initialization result to the sensing APP.

The sensing initialization results correspond one-to-one with the designated rooms or the designated APs in S701. If, in S711, the sensing server obtains the sensing judgment threshold through the sensing initialization algorithm, the sensing initialization result is success, otherwise, the sensing initialization result is failure, and the failure reason is carried.

For example, the failure reason can be indicated by a field of enumerate type, that is, enumerate {OutOfTime, NotEnoughData}. OutOfTime indicates that the CSI data reported by the AP is not received within the initialization time window, thus the initialization process is abandoned. NotEnoughData indicates that the initialization cannot be completed due to insufficient CSI data received.

### II. The sensing trigger/update process

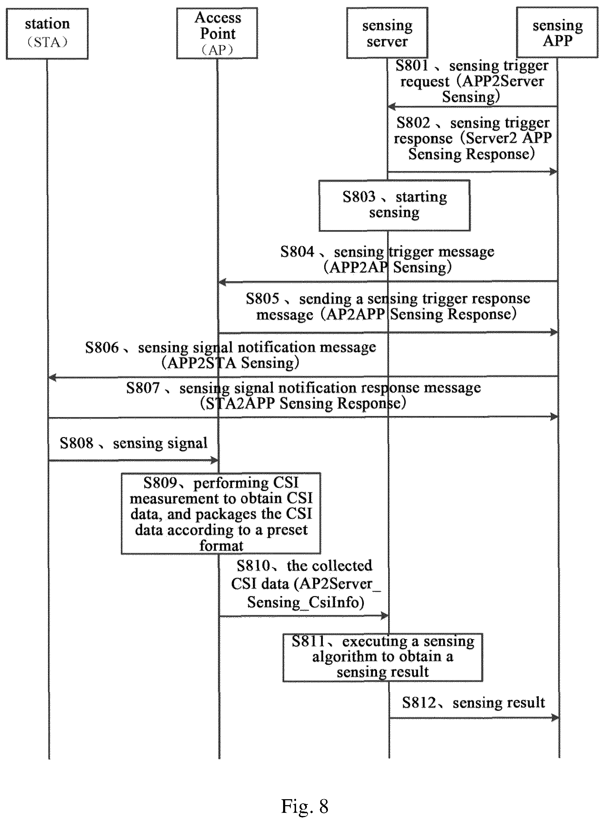

After the sensing initialization process is completed, the sensing service can be triggered, and during the process of sensing service, the parameters of the sensing service can also be updated, such as frequency of reporting the sensing results by the sensing server can be updated. Wherein, the sensing trigger process is the same as the sensing update process. Taking the sensing trigger process as an example, as shown in Fig. 8, it includes the following blocks:
S801: The sensing APP sends a sensing trigger request (APP2Server Sensing) to the sensing server.

The sensing trigger request is the first request in the above examples. The sensing trigger request includes information of an AP that needs to perform the sensing task. The information of the AP may be the information of the AP in a designated room or some designated rooms, or the information of the AP may be the information of a designated AP.

The information of the AP can specifically include the MAC address of the AP and the CSI sampling rate of the AP.

The sensing trigger request also includes the frequency of reporting the sensing results and the type of CSI data to be sampled.

It can be understood that if the sensing update is needed, the message sent in this block is a sensing update request. The format of the sensing update request is the same as that of the sensing trigger request, and the sensing update request includes updated parameters, such as an updated reporting rate.

S802: The sensing server returns a sensing trigger response (Server2 APP Sensing Response) in reply to the sensing APP.

The sensing trigger response is the first response in the above examples. After receiving the sensing trigger request, the sensing server calculates whether its own computing and storage resources meet the sensing requirements according to the number of APs that need to perform the sensing tasks, and if yes, it returns a response of success; if not, it returns a response of failure, and the failure reason is carried in the response.

For example, the failure reason can be indicated by a field of enumerate type, that is, enumerate {NotEnoughCP, NotEnoughMemory}, where NotEnoughCP indicates insufficient computing power and NotEnoughMemory indicates insufficient storage space.

S803: The sensing server starts sensing.

S804: The sensing APP sends a sensing trigger message (APP2AP Sensing) to the AP.

The sensing trigger message is the second request in the above examples. The sensing APP needs to send a sensing trigger message to each AP performing the sensing task, and one of the APs is exemplarily shown in Fig. 8.

The sensing trigger message includes a data type of a specified CSI to be sampled, a CSI sampling rate, information of sensing server address version and a detailed address, a port number of the sensing server and information of an STA(s) bound to the AP. The information of the STA can specifically be the MAC address of the STA.

It can be understood that if the sensing update is needed, the message sent in this block is a sensing update message, the format of the sensing trigger message is the same as that of the sensing update message, and the sensing update message carries updated parameters.

S805: The AP sends a sensing trigger response message (AP2APP Sensing Response) to the sensing APP.

The sensing trigger response message is the second response in the above examples. After receiving the sensing trigger message, if the AP determines that it has the ability to measure and report the CSI, it returns a response message of sensing trigger success; if the AP determines that it does not have the ability to measure and report the CSI, it returns a response message of sensing trigger failure, and the response message carries the failure reason.

For example, the failure reason can be indicated by a field of enumerate type, that is, enumerate {NotSupportCSIMeas, NotEnoughResource}, where NotSupportCSIMeas indicates that the AP does not support the ability to measure the CSI, and NotEnoughResource indicates that the AP is currently short of resources.

S806: The sensing APP sends a sensing signal notification message (APP2STA Sensing) to the STA.

The sensing signal notification message is the third request in the above examples. The sensing APP needs to send a sensing signal notification message to each STA performing the sensing task separately, one of the STAs is exemplarily shown in Fig. 8.

The sensing signal notification message is to inform the STA to start sending the sensing signal according to the designated packet sending rate, and the sensing signal notification message includes the designated packet sending rate and the MAC address of the AP bound to the STA.

It can be understood that if the sensing update is needed, the message sent in this block is a sensing update notification message, the format of the sensing signal notification message is the same as that of the sensing update notification message, and the sensing update notification message carries updated parameters, such as the updated sampling rate of the AP.

S807: The STA sends a sensing signal notification response message (STA2APP Sensing Response) to the sensing APP.

The sensing signal notification response message is the third response in the above examples. After receiving the sensing signal notification message, the STA returns a response message of success if it determines that it has the ability to send a sensing signal, and returns a response message of failure if it is determines that it does not have the ability to send the sensing signal, and a failure reason is carried in the response message.

For example, the failure reason can be indicated by a field of enumerate type, that is, enumerate {NotSupportCSI, NotEnoughResource}. NotSupportCSIMeas indicates that the STA does not support sending the sensing signal, and NotEnoughResource indicates that the STA is currently short of resources.

S808: The STA sends a sensing signal to the AP.

The STA can send a sensing signal to the AP bound to itself according to configuration, and the data type of the sensing signal can be Data, QoS Data or NULL Data.

S809: The AP performs CSI measurement to obtain CSI data, and packages the CSI data according to a preset format.

The AP can perform the CSI measurement according to a data type of CSI to be collected by the sensing APP for its own configuration needs, to obtain the CSI data of the data type.

S810: The AP sends the collected CSI data (AP2Server_Sensing_CsiInfo) to the sensing server at a fixed CSI sampling rate.

Optionally, the AP can also send to the sensing server at preset time intervals the CSI data that has been collected multiple times within a preset time interval.

S811: The sensing server executes a sensing algorithm to obtain a sensing result.

S812: The sensing server sends the sensing result to the sensing APP according to a pre-configured reporting rate.

The sensing initialization results correspond one-to-one with the designated rooms or the designated APs in S801.

For example, the sensing result can be indicated by a field of enumerate type, that is, enumerate {False, True, Invalid}. False indicates that there is no one and True indicates that there is someone. If the sensing result cannot be obtained this time, Invalid is sent, indicating that the result is invalid.

### III. The sensing termination process

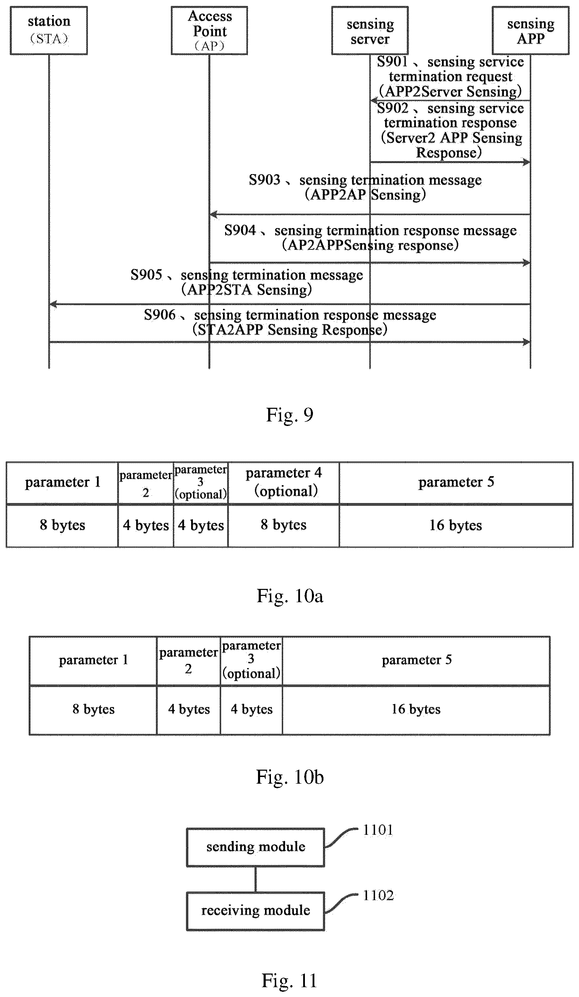

When the sensing service needs to be terminated, the sensing APP can initiate a sensing termination process, as shown in Fig. 9, which specifically includes the following blocks:
S901: The sensing APP sends a sensing service termination request (APP2Server Sensing) to the sensing server.

The service termination request is the first termination request in the above examples. The sensing service termination request includes information of an AP that needs to perform the sensing task. The information of the AP may be the information of the AP in a designated room or some designated rooms, or the information of the AP may be the information of a designated AP.

S902: The sensing server sends a sensing service termination response (Server2 APP Sensing Response) to the sensing APP.

The sensing server termination response is the first termination response in the above examples. After receiving the sensing service termination request, the sensing server stops processing the CSI data, stops the sensing algorithm, stops reporting the sensing result, and sends a sensing service termination response to the sensing APP.

S903: The sensing APP sends a sensing termination message (APP2AP Sensing) to the AP.

The sensing termination message is the second termination request in the above examples. The sensing APP needs to send a sensing termination message to each AP performing the sensing task, and one of the APs is exemplarily shown in Fig. 9.

S904: The AP sends a sensing termination response message (AP2APPSensing response) to the sensing APP.

The sensing termination response message is the second termination response in the above examples. After receiving the sensing termination message, the AP stops reporting the CSI data and sends a sensing termination response message to the sensing APP.

S905: The sensing APP sends a sensing termination message (APP2STA Sensing) to an STA.

The sensing termination message is the third termination request in the above examples. The sensing APP needs to send a sensing termination message to each STA performing the sensing task separately, and one of the STAs is exemplarily shown in Fig. 9.

The sensing termination message is to inform the STA to stop sending the sensing signal.

S906: The STA sends a sensing termination response message (STA2APP Sensing Response) to the sensing APP.

The sensing termination response message is the third termination response in the above examples. When the STA receives the sensing termination message, it stops sending the sensing signal, and returns the sensing termination response message in reply to the sensing APP, indicating that it has stopped sending the sensing signal.

The message structure of each message in the above examples is described below. Each message in the above processes can be transmitted by using current standard transmission protocols, such as TCP/IP, UDP, HTTP, 5G, or the like, which is not limited by the examples of the present disclosure.

The message content of the above message serves as the payload of the standard protocol message, and the length of each parameter that the message needs to carry is in bits.

For a parameter that occupies one byte, if the parameter is optional and is not configured, the parameter will be automatically ignored in the message, that is, the parameter will not be included in the message. For a parameter that shares one byte with other parameters, if the parameter is optional and is not configured, the bits that the parameter needs to occupy remain in the message, and it can be considered that the value of the parameter is null, these bytes are meaningless by default, and the subsequent parameters that the message needs to carry occupy the following byte of the byte.

As an example, taking the message structure shown in Fig. 10a as an example, the payload of the message carries five parameters, that is, parameter 1 to parameter 5, in which parameter 1 occupies 8 bits, parameter 2 occupies 4 bits, parameter 3 occupies 4 bits, parameter 4 occupies 8 bits and parameter 5 occupies 16 bits.

Parameters 3 and 4 are optional parameters. If parameters 1 to 5 are all configured, the message occupies 40 bits, that is, 5 bytes.

If only parameter 4 is not configured, parameter 4 can be ignored because it occupies a whole byte. In this case, the message structure of the message is as shown in Fig. 10b, and the whole message occupies 32 bits.

If only parameter 3 is not configured, since that parameter 3 and parameter 2 occupy 1 byte jointly, at this time, the 4 bits occupied by parameter 3 are reserved. In this case, the message structure of the message is still as shown in Fig. 10a, that is, the whole message still occupies 40 bits.

Optionally, the respective messages involved in the examples of the present disclosure can also be transmitted through a non-standard protocol, in which case, the respective parameters can be sent as the main content of the message.

For ease of understanding, the structures of respective messages involved in the above examples are described below in the form of a table.

The first request, the first initialization request, the first update request and the first termination request are all sensing messages of a first type, that is, an App2Server_Sensing message.

The sensing message of a first type includes a message type, an initialization time window and information of a designated AP;

The message type occupies 4 bits, and indicates that the sensing message of a first type is: the first request when taking a value of a first value; the first update request when taking a value of a second value; the first initialization request when taking a value of a third value; and, the first termination request when taking a value of a fourth value;
the initialization time window occupies 4 bits, and takes a value of null in the event that the sensing message of a first type is not the first initialization request;
in the event that the designated AP is bound to a room, the sensing message of a first type further comprises a number of rooms and room information of each room, and the information of the designated AP is located in the room information of the bound room, and the room information includes a room identifier, a reporting rate of the sensing server, a data type of measurement data, a number of designated APs in the room and information of each designated AP; wherein, the number of rooms occupies 8 bits, the room identifier occupies 16 bits, the reporting rate of the sensing server and the data type of the measurement data each occupy 4 bits, and the values of the reporting rate of the sensing server and the data type of the measurement data are null in the event that the sensing message of a first type is the first initialization request or the first termination request; the number of designated APs in the room occupies 8 bits; the information of each designated AP in the room includes a MAC address of the AP and a sampling rate of measurement data by the AP, wherein the MAC address of the AP occupies 48 bits, and the sampling rate of the measurement data by the AP occupies 4 bits, and the sampling rate of the measurement data by the AP in the room takes a value of null in the event that the sensing message of a first type is the first termination request;
in the event that the designated AP is not bound to a room, the sensing message of a first type also includes a number of designated APs, and the information of each designated AP includes a MAC address of the AP, a reporting rate of the sensing server and a sampling rate of measurement data by the AP;
wherein, the number of the designated APs occupies 8 bits, the MAC address of the AP occupies 48 bits, and the reporting rate of the sensing server and the sampling rate of measurement data by the AP each occupy 4 bits; in the event that the sensing message of a first type is the first initialization request or the first termination request, the reporting rate of the sensing server takes a value of null; in the event that the sensing message of a first type is the first termination request, the sampling rate of the measurement data by the designated AP takes a value of null.

The format of this message is shown in Table 1.

**Table 1**

| **parameter** | **number of bits** | **explanation** |
|---|---|---|
| messageType | 4 | To indicate the message type, enumerate { Trigger, Update, Initial, Termination, ... }, 0000,0001,0010,0011 indicate trigger, update, initialization and termination, respectively , and the remaining unused values are temporarily reserved. |
| initialTimeWindow | 4 | To indicate the time window for initialization, in seconds. {300, 600, 900, 1200, ...} seconds can be configured, with a maximum of 16 values. 000 |
| | | corresponds to 300s, 001 corresponds to 600s, and so on. If it is not configured during initialization, the sensing server defaults to a time window, such as 600s s. |
| | | Optional field is configured only in the first initialization request, and this field is null in other messages. |
| roomNumber | 8 | To indicate the number of rooms, up to256. |
| roomInfo [roomNumber] | | information of rooms |
| ->roomId | 2*8 | To indicate a room ID, specifically includes fields in the following 4 lines. |
| ->reportRate | 4 | To indicate the reporting rate of the sensing server. During configuration, {{1Hz, 0.5Hz, 0.2Hz, 0.1Hz,...}, ...} can be configured, with a maximum of 16 types. If less than 16 types, 0000 represents 1Hz, 0001 represents 0.5Hz, and so on. Optional field, which is not configured in the first initialization request and the first termination request, that is, it takes a value of null. |
| ->dataType | 4 | To indicate the data type of CSI to be collected, Enumerate{NULL data, QoS NULL data, data, QoS Data, ...}, a maximum of 16 values can be configured. 0000, 0001, 0010 and 0011 represent NULL Data, QoS NULL data, Data and QoS Data, respectively and the subsequent are reserved. |
| | | Optional field, which is not configured in the first initialization request and the first termination request, that is, it takes a value of null. |
| apNumber | 8 | To indicate the number of APs, up to 256 |
| ->apInfo [apNumber] | | information about the AP in the room, specifically includes fields in the following two lines. |
| -->MAC Address | 6*8 | To indicate the MAC address of an AP |
| -->sampleRate | 4 | To indicate the CSI sampling rate of the AP. Only the uppermost 3 bits are used, and the last 1 bit is reserved and not used. During configuration, {10, 20, 30, 50, 100, 200, 300, 500} Hz can be |
| | | configured, 000 represents 10Hz, 001 represents 20H, and so on. |
| | | Optional field, which is not configured in the first termination request, that is, it takes a value of null. |
| apNumber | 8 | To indicate the number of APs, up to 256. |
| | | Optional, if an AP is not bound to a room, it needs to be configured separately. |
| apInfo[apNumber] | | To indicate information about the AP. If an AP is not bound to a room, it needs to be configured separately. |
| | | Optional field, this parameter is configured when apNumber is not zero, and this parameter specifically includes the fields in the following 3 lines. |
| ->MAC Address | 6*8 | To indicate the MAC address of the AP. |
| ->reportRate | 4 | To indicate the reporting rate of the sensing server. During configuration, {{1Hz, 0.5Hz, 0.2Hz, 0.1Hz,...}, ...} can be configured, up to 16 kinds. If it is less than 16 kinds, 0000 represents 1Hz, 0001 represents 0.5Hz, and so on. |
| | | Optional field, which is not configured in the first initialization request and the first termination request, that is, it takes a value of null. |
| ->sampleRate | 4 | To indicate the CSI sampling rate of the AP. Only the uppermost 3 bits are used, and the last 1 bit is reserved and not used. During configuration, {10, 20, 30, 50, 100, 200, 300, 500} Hz can be configured, 000 represents 10Hz, 001 represents 20H, and so on. |
| | | Optional field, which is not configured in the first termination request. |

The first response, the first initialization response, the first update response and the first termination response are all sensing response messages of a first type, that is, Server2App_Sensing_Response.

The sensing response message of a first type includes a message type, a response result and a failure reason;
the message type occupies 4 bits, and indicates that the sensing response message of a first type is: the first response when taking a value of a first value; the first update response when taking a value of a second value; the first initialization response when taking a value of a third value; and, the first termination response when taking a value of a fourth value;
the response result occupies 1 bit, and the response result is success or failure;
a failure reason occupies 3 bits, and when the response result is failure, the failure reason is represented by a field of enumerate type;
when the sensing message of a first type is the first termination response, the failure reason takes a value of null.

The format of this message is shown in Table 2:

**Table 2**

| **parameter** | **number of bits** | **explanation** |
|---|---|---|
| messageType | 4 | To indicate the message type, enumerate { Trigger, Update, Initial, Termination} indicates trigger, update, initialization and termination respectively. |
| results | 1 | To indicate a response result, enumerate {Failure, Succeed}} indicates failure and success respectively. |
| failureReason | 3 | To indicate the failure reason. It is configured when results are Failure. Enumerate {NotEnoughCP, NotEnoughMemory} is adopted to represent the failure due to insufficient computing power and insufficient storage space respectively. |
| | | Optional field, which is not configured in the first termination response. |

The second request, the second request, the second initialization request, the second update request and the second termination request are all sensing messages of a second type, that is, APP2AP_Sensing.

The sensing message of a second type includes a message type, a data type, a sampling rate of measurement data, an IP address version of the sensing server, an IP address of the sensing server, a port number of the sensing server, a number of designated STA(s)s and information of each designated STA(s);
wherein, when the sensing message of a second type is the second termination request, the data type, the sampling rate of measurement data, the IP address version of the sensing server, the IP address of the sensing server, the port number of the sensing server, the number of the designated STA(s)s and the information of each designated STA(s) are all take a value of null;
the message type and the data type each occupy 4 bits, the sampling rate of measurement data occupies 3 bits, the IP address version of the sensing server occupies 1 bit, the IP address of the sensing server occupies 128 bits or 32 bits, and the port number of the sensing server occupies 16 bits;
the information of each designated STA(s) occupies 48 bits and comprises a MAC address of the STA.

The format of this message is shown in Table 3.

**Table 3**

| **parameter** | **number of bits** | **explanation** |
|---|---|---|
| messageType | 4 | To indicate the message type, enumerate { Trigger, Update, Initial, Termination, ... }, 0000,0001,0010,0011 indicate trigger, update, initialization and termination respectively, and the unused values are temporarily reserved. |
| dataType | 4 | To indicate the data type of CSI to be collected, Enumerate{NULL Data, QoS NULL data, data, QoS Data, ...}, 0000,0001,0010,0011 respectively represent NULL data, QoS NULL data, Data and QoS data, and the unused values are temporarily reserved. |
| | | Optional field, which is not configured in the second termination request, that is, it takes a value of 0. |
| sampleRate | 3 | To indicate the CSI sampling rate of the AP. During configuration, {10, 20, 30, 50, 100, 200, 300, 500} Hz can be configured, 000 represents 10Hz, 001 represents 20H, and so on. |
| | | Optional, it is not configured in the second termination request, that is, it takes a value of 0. |
| ipProtocolVersion | 1 | To indicate the IP address version of the server, 0 represents IPV6 and 1 represents IPv4. |
| | | Optional, it is not configured in the second termination request, that is, it takes a value of 0. |
| serverIPAddress | 16*8 or 4*8 | The address of the ServerIP to which the CSI should be reported, it is related to the ipProtocalVersion field. In the case of IPv6, it occupies 16*8 bits in total; in the case of IPv4, it occupies 4*8 bits in total. |
| | | Optional, it is not configured in the second termination request, that is, it takes a value of 0. |
| Port | 2*8 | To indicate the port number of the Server. |
| | | Optional, it is not configured in the second termination request, that is, it takes a value of 0. |
| staNumber | 8 | The number of STAs, with maximum of 256. Optional, it is not configured in the second termination request, that is, it takes a value of 0. |
| STAinfo[staNumber] | | To indicate the information of one or more STAs bound to the AP. |
| | | Optional, it is not configured in the second termination request, that is, it takes a value of 0. This parameter specifically includes the fields in the next line. |
| ->STA MAC Address | 6*8 | The MAC address of the STA connected to the AP. |

The second response, the second initialization response, the second update response and the second termination response are all sensing response messages of a second type, namely, AP2APP_Sensing_Response'.

The sensing response message of a second type includes a message type, a response result, a failure reason and a MAC address of the designated AP;
the message type occupies 4 bits and indicates that the sensing response message of a second type is: the second response when taking a value of a first value; the second update response when taking a value of a second value; the second initialization response when taking a value of a third value; and, the second termination response when taking a value of a fourth value;
the response result occupies 1 bit and is either success or failure;
the failure reason occupies 3 bits, and when the response result is failure, is represented by a field of enumerate type;
in the event that the sensing message of a second type is the second termination response, the failure reason takes a value of null;
the MAC address of the designated AP occupies 48 bits.

The format of this message is shown in Table 4:

**Table 4**

| **parameter** | **number of bits** | **explanation** |
|---|---|---|
| messageType | 4 | To indicate the message type, enumerate { Trigger, Update, Initial, Termination, ... }, 0000,0001,0010,0011 indicate trigger, update, initialization and termination respectively, and unused values are temporarily reserved. |
| Results | 1 | To indicate a response result, enumerate {Failure, Succeed}} indicates failure and success respectively. |
| FailureReason | 3 | To indicate the failure reason. It is configured when results are Failure. Enumerate {NotSupportCSIMeas, NotEnoughResource} indicates that CSI measurement is not supported and current resources are insufficient respectively. |
| | | Optional, it is not configured in the second termination response, that is, it takes a value of null. |
| AP MAC Address | 6*8 | To indicate the MAC address of the AP. |

The third request, the third initialization request, the third update request and the third termination request are all sensing messages of a third type, namely, App2STA_Sensing.

The sensing message of a third type includes a message type and a designated packet sending rate;
wherein, the message type occupies 4 bits and indicates that the sensing message of a third type is: the third request when taking a value of a first value; the third update request when taking a value of a second value; the third initialization request when taking a value of a third value; and, the third termination request when taking a value of a fourth value;
the designated packet sending rate and the MAC address of the designated AP each occupy 4 bits, and in the event that the sensing message of a third type is the third termination request, the designated packet sending rate takes a value of null;
in the event that the sensing message of a third type is the third request, the third initialization request or the third update request, the sensing message of a third type further includes a MAC address of the designated AP, which occupies 48 bits.

The format of this message is shown in Table 5:

**Table 5**

| **parameter** | **number of bits** | **explanation** |
|---|---|---|
| messageType | 4 | To indicate the message type, enumerate { Trigger, Update, Initial, Termination, ...}, 0000,0001,0010,0011 indicate trigger, update, initialization and termination respectively, and the unused values are temporarily reserved. |
| sampleRate | 4 | To indicate the packet sending rate. Only the uppermost 3 bits are used, and the last 1 bit is reserved and not used. During configuration, {10, 20, 30, 50, 100, 200, 300, 500} Hz can be configured, 000 represents 10Hz, 001 represents 20H, and so on. |
| | | Optional field, which is not configured in the third termination request, that is, it takes a value of null. |
| AP MAC Address | 6*8 | To indicate the MAC address of the AP bound to the STA. |
| | | Optional field, which is not configured in the third termination request, that is, this parameter is not included in the third termination request. |

The third response, the third response, the third initialization response, the third update response and the third termination response are all sensing response messages of a third type, namely, STA2App_Sensing_ Response.

The sensing response message of a third type includes a message type, a response result, a failure reason and a MAC address of the designated STA(s);
the message type occupies 4 bits and indicates that the sensing response message of a third type is: the third response when taking a value of a first value; the third update response when taking a value of a second value; the third initialization response when taking a value of a third value; and, the third termination response when taking a value of a fourth value;
the response result occupies 1 bit and is either success or failure;
the failure reason occupies 3 bits, and when the response result is failure, the failure reason is represented by a field of enumerate type;
in the event that the sensing message of a third type is the third termination response, the failure reason takes a value of null.

The format of this message is shown in Table 6:

**Table 6**

| **parameter** | **number of bits** | **explanation** |
|---|---|---|
| messageType | 4 | To indicate the message type, enumerate{ Trigger, Update, Initial, Termination, ... }, 0000,0001,0010,0011 indicate trigger, update, initialization and termination respectively, and |
| | | unused values are temporarily reserved. |
| Results | 1 | To indicate the response result, enumerate {Failure, Succeed}} indicating failure and success respectively. |
| FailureReason | 3 | To indicate the failure reason. It is configured when results are Failure. Enumerate {NotSupportCSI, NotEnoughResource} indicates that CSI sensing signal is not supported and current resources are insufficient respectively. |
| | | Optional field, which is not configured in the third termination response. |
| STA MAC Address | 6 | To indicate the MAC address of the STA. |

In addition, the measurement data reported by the designated AP in the above example is located in a sensing message of a fourth type, namely, AP2Server_Sensing_CsiInfo.

The sensing message of a fourth type includes a number of channel state information CSI samples and CSI samples;
each CSI includes a first number of CSI packets, and each CSI packet is a data structure of a structural type and is to carry CSI measurement data obtained by a single sampling of a sensing signal by the designated AP.

The format of this message is shown in Table 7.

**Table 7**

| **parameter** | **number of bits** | **explanation** |
|---|---|---|
| csiNumber | 8 | To indicate the number of CSI samples |
| CSIInfo[csiNumber ] | | CSI samples. Maximum number of csiNumber of CsiPackages are reported. |
| ->CsiPackage | | CSI data structure, is of a structural type, which depends on specific implementation and is not specified in present disclosure. |

In one implementation, the sensing result and the sensing initialization result in the above example are located in a sensing result message, namely, Server2App_Sensing_Results.

The sensing result message includes a message type, an initialization result and a failure reason;
the message type occupies 4 bits and indicates that the sensing result message is to carry: the sensing result when taking a value of a first value; and, the sensing initialization result when taking a value of a second value;
the initialization result occupies 1 bit and is either success or failure;
a failure reason occupies 3 bits, and when the initialization result is success, the failure reason is represented by a field of enumerate type;
in the event that the sensing result message is to carry the sensing result, the initialization result and the failure reason each take a value of null, and the sensing message of a fifth type also includes a number of sensing results and information of each sensing result;
the number of sensing results occupies 8 bits, and its maximum value is 256;
the information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

The format of this message is shown in Table 8:

**Table 8**

| **parameter** | **number of bits** | **explanation** |
|---|---|---|
| messageType | 4 | To indicate the message type, and enumerate{Trigger, Initial, ...}, 0000,0001 indicate trigger and initialization respectively, and unused values are temporarily reserved. |
| initialResults | 1 | To indicate the initialization result. enumerate {Failure, Succeed}}, if it is Failure, the failure reason will be given in the following parameter. |
| | | Optional field, it is only configured in the initialization result. |
| FailureReason | 3 | To indicate the failure reason. Enumerate { OutOfTime, NOTEOUGHDATA} indicates that initialization is timeout and no CSI data has been received, and CSI data is not enough to support initialization, respectively. |
| | | Optional field, it can be configured only when the initialization result is Failure. |
| resultNumber | 8 | To indicate the number of reported results, up to 256. |
| SensingResults [ resultNumber ] | | maximum number of resultNumber of rooms or AP results. |
| | | Optional field, it is only configured in the sensing result of a non-initialization phase. |
| ->roomID | 2*8 | To indicate the ID of a room. |
| | | Optional field, it is either roomID or AP MAC Address. |
| ->AP MAC Address | 6*8 | To indicate the MAC address of an AP. |
| | | Optional field, it is either roomID or AP MAC Address. |
| ->sensingResults | 8 | To indicate the sensing result, enumerate{False, True, Invalid} indicates that there is no one, there is someone, and an invalid result, respectively, where the uppermost two bits are used, 00 indicates False, 01 indicates True, 10 indicates Invalid, and other bits are reserved. |

In another example, the sensing result is located in a sensing result message, and the sensing initialization result is located in a sensing initialization result message.

The sensing result message includes a number of sensing results and each sensing result;
the number of sensing results occupies 8 bits, and its maximum number is 256;
information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

The format of this message is shown in Table 9:

**Table 9**

| **parameter** | **number of bits** | **explanation** |
|---|---|---|
| resultNumber | 8 | To indicate the number of reported results, up to 256. |
| SensingResults [ resultNumber ] | | Maximum number of resultNumber of rooms or AP results. |
| | | Optional field, it is only configured in the sensing result of a non-initialization phase. |
| ->roomID | 2*8 | To indicate the ID of a room. |
| | | Optional field, it is either roomID or AP MAC Address. |
| ->AP MAC Address | 6*8 | To indicate the MAC address of an AP. |
| | | Optional field, it is either roomID or AP MAC Address. |
| ->sensingResults | 8 | To indicate the sensing result, enumerate{False, True, Invalid} indicates that there is no one, there is someone and an invalid result, respectively, where the uppermost two bits are used, 00 indicates False, 01 indicates True, 10 indicates Invalid, and other bits are reserved. |

The sensing initialization result message includes an initialization result and a failure reason;
the initialization result occupies 1 bit and is either success or failure;
the failure reason occupies 3 bits, and when the initialization result is success, the failure reason is represented by a field of enumerate type.

The format of this message is shown in Table 10:

**Table 10**

| **parameter** | **number of bits** | **explanation** |
|---|---|---|
| initialResults | 1 | To indicate the initialization result. enumerate {Failure, Succeed}}, if it is Failure, the failure reason is given in the following parameter. |
| | | Optional field, it is only configured in the initialization result. |
| FailureReason | 3 | To indicate the failure reason. Enumerate {OutOfTime, NOTEOUGHDATA} indicates that the initialization is timeout, the CSI data has not been received, and CSI data is not enough to support initialization, respectively. |
| | | Optional field, which is configured only when the initialization result is Failure. |

By adopting the method in the examples of the present disclosure, not only an end-to-end WiFi sensing process is specified, but also the specific message structures of the messages interacting between the devices are specified, such that an end-to-end sensing initialization, triggering, updating and termination can be realized, which is beneficial to the landing of the actual end-to-end WiFi sensing service.

Corresponding to the above method example, an example of the present disclosure further provides a sensing apparatus, which is applied to a sensing device. As shown in Fig. 11, the apparatus comprises:
a sending module 1101, to send a first request to a sensing server, wherein the first request is to request the sensing server to start a sensing service for a designated AP, and the sensing service of the sensing server is to receive measurement data reported by the designated AP and obtain a sensing result based on the measurement data;
a receiving module 1102, to receive a first response sent by the sensing server with respect to a first request;
wherein, the sending module 1101 is further to send a second request to the designated AP when the first response includes a success indication, wherein the second request is to inform the designated AP to start the sensing service, and the second request comprises information of a designated STA(s) bound to the designated AP and information of the sensing server, and the sensing service of the designated AP is to, after obtaining the measurement data by performing signal measurement on a sensing signal sent by the designated STA(s), report the measurement data to the sensing server;
the receiving module 1102 is further to receive a second response sent by the designated AP with respect to the second request;
the sending module 1101 is further to send a third request to the designated STA(s) when the second response comprises a success indication, wherein the third request is to inform the designated STA(s) to send the sensing signal to the designated AP;
the receiving module 1102 is further to receive a third response sent by the designated STA(s) with respect to the third request; and, start receiving the sensing result sent by the sensing server when the third response comprises a success indication.

Optionally, the sending module 1101 is further to send a first update request to the sensing server if information of the designated AP is updated, wherein the first update request comprises updated information of the designated AP;
the receiving module 1102 is further to receive a first update response sent by the sensing server with respect to the first update request, wherein the first update response is to indicate whether the sensing server has been updated successfully.

Optionally, the sending module 1101 is further to send a second update request to the designated AP if the information of the designated STA(s) bound to the designated AP or the information of the sensing server is updated, wherein the second update request comprises updated information of the designated STA(s) bound to the designated AP and/or updated information of the sensing server;

The receiving module 1102 is further to receive a second update response sent by the designated AP with respect to the second update request, wherein the second update response is to indicate whether the designated AP has been updated successfully.

Optionally, the third request further includes a designated packet sending rate, and the sending module 1101 is further to send a third update request to the designated STA(s) if the information of the designated AP bound to the designated STA(s) or the designated packet sending rate is updated, wherein the third update request comprises updated information of the designated AP bound to the designated STA(s) and/or updated designated packet sending rate;

The receiving module 1102 is further to receive a third update response sent by the designated STA(s) with respect to the third update request, wherein the third update response is to indicate whether the designated STA(s) is updated successfully.

Optionally, the sending module 1101 is further to send a first initialization request to the sensing server, wherein the first initialization request is to request the sensing server to start a sensing initialization service for the designated AP, and the sensing initialization service of the sensing server is to receive the measurement data reported by the designated AP within an initialization time window and obtain a sensing initialization result based on the measurement data;

The receiving module 1102 is further to receive a first initialization response sent by the sensing server with respect to the first initialization request;

The sending module 1101 is further to send a second initialization request to the designated AP when the first initialization response comprises a success indication, wherein the second initialization request is to inform the designated AP to start the sensing initialization service, the second initialization request comprises the information of the designated STA(s) bound to the designated AP and the information of the sensing server, and the sensing initialization service of the designated AP is to, after obtaining the measurement data by performing signal measurement on a sensing signal sent by the designated STA(s), report the measurement data to the sensing server ;

The receiving module 1102 is further to receive a second initialization response sent by the designated AP with respect to the second initialization request;

The sending module 1101 is further to send a third initialization request to the designated STA(s) when the second initialization response comprises a success indication, wherein the third initialization request is to inform the designated STA(s) to start sending the sensing signal to the designated AP;

The receiving module 1102 is further to receive a third initialization response sent by the designated STA(s) with respect to the third initialization request; and receive the sensing initialization result sent by the sensing server when the third initialization response comprises a success indication.

Optionally, the sending module 1101 is further to send a first termination request to the sensing server, wherein the first termination request is to request the sensing server to terminate sensing the measurement data reported by the designated AP and to terminate reporting the sensing result to the sensing device;

The receiving module 1102 is further to receive a first termination response sent by the sensing server with respect to the first termination request;

The sending module 1101 is further to send a second termination request to the designated AP, wherein the second termination request is to request the designated AP to stop measuring the sensing signal;

The receiving module 1102 is further to receive a second termination response sent by the designated AP with respect to the second termination request;

The sending module 1101 is further to send a third termination request to the designated STA(s), wherein the third termination request is to request the designated STA(s) to stop sending the sensing signal;

The receiving module 1102 is further to receive a third termination response sent by the designated STA(s) with respect to the third termination request.

Optionally, the first request, the first initialization request, the first update request and the first termination request are all sensing messages of a first type;
the sensing message of a first type comprises a message type, an initialization time window and information of a designated AP;
wherein, the message type occupies 4 bits and indicates that the sensing message of a first type is: the first request when taking a value of a first value; the first update request when taking a value of a second value; the first initialization request when taking a value of a third value; and, the first termination request when taking a value of a fourth value;
the initialization time window occupies 4 bits and takes a value of null in the event that the sensing message of a first type is not the first initialization request;
in the event that the designated AP is bound to a room, the sensing message of a first type further comprises a number of rooms and room information of each room, the information of the designated AP is located in the room information of the bound room, and the room information comprises a room identifier, a reporting rate of the sensing server, a data type of measurement data, a number of designated APs in the room and information of each designated AP; wherein, the number of rooms occupies 8 bits, the room identifier occupies 16 bits, and the reporting rate of the sensing server and the data type of the measurement data each occupy 4 bits, and the values of the reporting rate of the sensing server and the data type of the measurement data are null in the event that the sensing message of a first type is the first initialization request or the first termination request; the number of designated APs in the room occupies 8 bits; the information of each designated AP in the room comprises a MAC address of the AP, and a sampling rate of measurement data by the AP, wherein the MAC address of the AP occupies 48 bits, and the sampling rate of measurement data by the AP occupies 4 bits, and the sampling rate of measurement data by the AP in the room takes a value of null in the event that the sensing message of a first type is the first termination request;
in the event that the designated AP is not bound to a room, the sensing message of a first type also comprises a number of designated APs, and the information of each designated AP comprises a MAC address of the AP, a reporting rate of the sensing server and a sampling rate of measurement data by the AP;
wherein, the number of the designated APs occupies 8 bits, the MAC address of the AP occupies 48 bits, and the reporting rate of the sensing server and the sampling rate of measurement data by the AP each occupy 4 bits; when the sensing message of a first type is the first initialization request or the first termination request, the reporting rate of the sensing server takes a value of null; in the event that the sensing message of a first type is the first termination request, the sampling rate of measurement data by the designated AP takes a value of null.

Optionally, the first response, the first initialization response, the first update response and the first termination response are all sensing response messages of a first type;
the sensing response message of a first type includes a message type, a response result and a failure reason;
the message type occupies 4 bits, and indicates that the sensing response message of a first type is: the first response when taking a value of a first value; the first update response when taking a value of a second value; the first initialization response when taking a value of a third value; and, the first termination response when taking a value of a fourth value;
the response result occupies 1 bit, and is either success or failure;
the failure reason occupies 3 bits, and when the response result is failure, the failure reason is represented by a field of enumerate type;
in the event that the sensing message of a first type is the first termination response, the failure reason takes a value of null.

Optionally, the second request, the second initialization request, the second update request and the second termination request are all sensing message of a second types;
the sensing message of a second type comprises a message type, a data type, a sampling rate of measurement data, an IP address version of the sensing server, an IP address of the sensing server, a port number of the sensing server, a number of the designated STA(s)s and information of each designated STA(s);
wherein, when the sensing message of a second type is the second termination request, the data type, the sampling rate of the measurement data, the IP address version of the sensing server, the IP address of the sensing server, the port number of the sensing server, the number of the designated STA(s)s and the information of each designated STA(s) all take a value of null;
the message type and the data type each occupy 4 bits, the sampling rate of the measurement data occupies 3 bits, the IP address version of the sensing server occupies 1 bit, the IP address of the sensing server occupies 128 bits or 32 bits, and the port number of the sensing server occupies 16 bits;
the information of each designated STA(s) occupies 48 bits and comprises a MAC address of the STA.

Optionally, the second response, the second initialization response, the second update response and the second termination response are all sensing response messages of a second type;
the sensing response message of a second type comprises a message type, a response result, a failure reason and a MAC address of the designated AP;
the message type occupies 4 bits and indicates that the sensing response message of a second type is: the second response when taking a value of a first value; the second update response when taking a value of a second value; the second initialization response when taking a value of a third value; and, the second termination response when taking a value of a fourth value;
the response result occupies 1 bit and is either success or failure;
the failure reason occupies 3 bits, and when the response result is failure, the failure reason is represented by a field of enumerate type;
in the event that the sensing message of a second type is the second termination response, the failure reason takes a value of null;
the MAC address of the designated AP occupies 48 bits.

Optionally, the third request, the third initialization request, the third update request and the third termination request are all sensing messages of a third type;
the sensing message of a third type comprises a message type and a designated packet sending rate;
wherein, the message type occupies 4 bits, and indicates that the sensing message of a third type is: the third request when taking a value of a first value; the third update request when taking a value of a second value; the third initialization request when taking a value of a third value; and, the third termination request when taking a value of a fourth value;
the designated packet sending rate and the MAC address of the designated AP each occupy 4 bits, and in the event that the sensing message of a third type is the third termination request, the designated packet sending rate takes a value of null;
in the event that the sensing message of a third type is the third request, the third initialization request or the third update request, the sensing message of a third type further comprises a MAC address of the designated AP, which occupies 48 bits.

Optionally, the third response, the third initialization response, the third update response and the third termination response are all sensing response messages of a third type;
the sensing response message of a third type includes a message type, a response result, a failure reason and a MAC address of the designated STA(s);
the message type occupies 4 bits and indicates that the sensing response message of a third type is: the third response when taking a value of a first value; the third update response when taking a value of a second value; the third initialization response when taking a value of a third value; and, the third termination response when taking a value of a fourth value;
the response result occupies 1 bit and is either success or failure;
the failure reason occupies 3 bits, and when the response result is failure, the failure reason is represented by a field of enumerate type;
in the event that the sensing message of a third type is the third termination response, the failure reason takes a value of null.

Optionally, the measurement data reported by the designated AP is located in a sensing message of a fourth type;
the sensing message of a fourth type includes a number of channel state information (CSI) samples and CSI samples;
each CSI sample includes a CSI packet, which is a data structure of structural type, and is to carry CSI measurement data obtained by a single sampling of a sensing signal by the designated AP.

Optionally, the sensing result and the sensing initialization result are located in a sensing result message;
the sensing result message includes a message type, an initialization result and a failure reason;
the message type occupies 4 bits and indicates that the sensing result message is to carry: the sensing result when taking a value of a first value; and the sensing initialization result when taking a value of a second value;
the initialization result occupies 1 bit and is either success or failure;
the failure reason occupies 3 bits, and when the initialization result is success, the failure reason is represented by a field of enumerate type;
in the event that the sensing result message is to carry the sensing result, the initialization result and the failure reason each take a value of null, and the sensing message of a fifth type also comprises a number of sensing results and information of each sensing result;
the number of sensing results occupies 8 bits, and its maximum value is 256;
the information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

Optionally, the sensing result is located in a sensing result message, and the sensing result message includes a number of sensing results and each sensing result;
the number of sensing results occupies 8 bits, and its maximum value is 256;
information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

Optionally, the sensing initialization result is located in a sensing initialization result message;
the sensing initialization result message includes an initialization result and a failure reason;
the initialization result occupies 1 bit and is either success or failure;
the failure reason occupies 3 bits, and when the initialization result is success, is represented by a field of enumerate type.

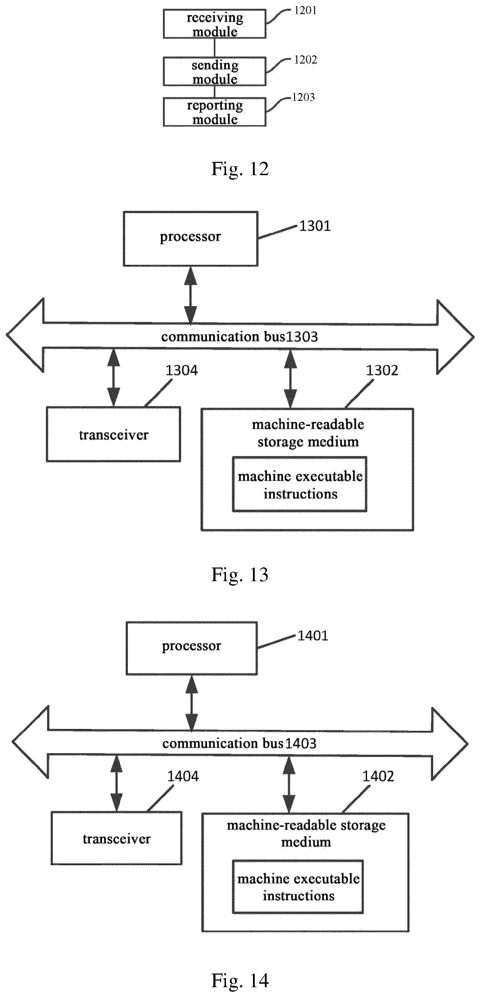

Corresponding to the above method example, an example of the present disclosure further provides a sensing apparatus, which is applied to a sensing server. As shown in Fig. 12, the apparatus comprises:
a receiving module 1201, to receive a first request sent by a sensing device, wherein the first request is to request the sensing server to trigger a sensing service for a designated AP;
a sending module 1202, to send a first response with respect to the first request to the sensing device;
wherein, the receiving module 1201 is further to receive measurement data reported by the designated AP when the first response comprises a success indication, wherein the designated AP is bound to a designated STA(s), and the measurement data is obtained after the designated AP performs signal measurement on a sensing signal sent by the designated STA(s);
a reporting module 1203, to report a sensing result of the measurement data to the sensing device.

Optionally, the receiving module 1201 is further to receive a first update request sent by the sensing device, wherein the first update request comprises updated information of the designated AP;
the sending module 1202 is further to send a first update response with respect to the first update request to the sensing device, wherein the first update response is to indicate whether the sensing server has been updated successfully.

Optionally, the receiving module 1201 is further to receive a first initialization request sent by the sensing device, wherein the first initialization request comprises an initialization time window and information of the designated AP;
the sending module 1202 is further to send a first initialization response with respect to the first initialization request to the sensing device;
the receiving module 1201 is further to receive the measurement data sent by the designated AP when the first initialization response includes a success indication, wherein the designated AP is bound to a designated STA(s), and the measurement data is obtained after the designated AP performs signal measurement on a sensing signal sent by the designated STA(s);
the sending module 1202 is further to send a sensing initialization result of the measurement data to the sensing device.

Optionally, the receiving module 1201 is further to receive a first termination request sent by the sensing device, wherein the first termination request is to request the sensing server to terminate sensing the measurement data reported by the designated AP and to terminate reporting the sensing result to the sensing device;
the sending module 1202 is further to send a first termination response with respect to the first termination request to the sensing device.

Optionally, the first request, the first initialization request, the first update request and the first termination request are all sensing messages of a first type;
the sensing message of a first type comprises a message type, an initialization time window and information of a designated AP;
wherein, the message type occupies 4 bits and indicates that the sensing message of a first type is: the first request when taking a value of a first value; the first update request when taking a value of a second value; the first initialization request when taking a value of a third value; and, the first termination request when taking a value of a fourth value;
the initialization time window occupies 4 bits, and takes a value of null in the event that the sensing message of a first type is not the first initialization request;
in the event that the designated AP is bound to a room, the sensing message of a first type further includes a number of rooms and room information of each room, and the information of the designated AP is located in the room information of the bound room, and the room information includes a room identifier, a reporting rate of the sensing server, a data type of measurement data, a number of designated APs in the room and information of each designated AP; wherein, the number of rooms occupies 8 bits, the room identifier occupies 16 bits, the reporting rate of the sensing server and the data type of the measurement data each occupy 4 bits, and the values of the reporting rate of the sensing server and the data type of the measurement data are null in the event that the sensing message of a first type is the first initialization request or the first termination request; the number of designated APs in the room occupies 8 bits; the information of each designated AP in the room comprises a MAC address of the AP and a sampling rate of measurement data by the AP, wherein the MAC address of the AP occupies 48 bits, and the sampling rate of measurement data by the AP occupies 4 bits, and the sampling rate of measurement data by the AP in the room takes a value of null in the event that the sensing message of a first type is the first termination request;
in the event that the designated AP is not bound to a room, the sensing message of a first type also comprises a number of designated APs, and the information of each designated AP comprises a MAC address of the AP, a reporting rate of the sensing server and a sampling rate of measurement data by the AP;
wherein, the number of designated APs occupies 8 bits, the MAC address of the AP occupies 48 bits, and the reporting rate of the sensing server and the sampling rate of measurement data by the AP each occupy 4 bits; in the event that the sensing message of a first type is the first initialization request or the first termination request, the reporting rate of the sensing server takes a value of null; in the event that the sensing message of a first type is the first termination request, the sampling rate of measurement data by the designated AP takes a value of null.

Optionally, the first response, the first response, the first initialization response, the first update response and the first termination response are all a sensing response messages of a first type;
the sensing response message of a first type comprises a message type, a response result and a failure reason;
the message type occupies 4 bits, and indicates that the sensing message of a first type is: the first response when taking a value of a first value; the first update response when taking a value of a second value; the first initialization response when taking a value of a third value; and, the first termination response when taking a value of a fourth value;
the response result occupies 1 bit and is either success or failure;
the failure reason occupies 3 bits, and when the response result is failure, the failure reason is represented by a field of enumerate type;
in the event that the sensing message of a first type is the first termination response, the failure reason takes a value of null.

Optionally, the measurement data reported by the designated AP is located in a sensing message of a fourth type;
the sensing message of a fourth type comprises a number of channel state information (CSI) samples and CSI samples;
each CSI sample comprises a CSI packet, which is a data structure of a structural type, and is to carry CSI measurement data obtained by a single sampling of a sensing signal by the designated AP.

Optionally, the sensing result and the sensing initialization result are located in a sensing result message;
the sensing result message comprises a message type, an initialization result and a failure reason;
the message type occupies 4 bits and indicates that the sensing result message is to carry: the sensing result when taking a value of a first value; and, the sensing initialization result when taking a value of a second value;
the initialization result occupies 1 bit, and is either success or failure;
the failure reason occupies 3 bits, and when the initialization result is success, the failure reason is represented by a field of enumerate type;
in the event that the sensing result message is to carry the sensing result, the initialization result and the failure reason each take a value of null, and the sensing message of a fifth type also comprises a number of sensing results and information of each sensing result;
the number of sensing results occupies 8 bits, and its maximum value is 256;
the information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

Optionally, the sensing result is located in a sensing result message, and the sensing result message includes a number of sensing results and each sensing result;
the number of sensing results occupies 8 bits, and its maximum value is 256;
information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

Optionally, the sensing initialization result is located in a sensing initialization message;
the sensing initialization message comprises an initialization result and a failure reason;
the initialization result occupies 1 bit and is either success or failure;
the failure reason occupies 3 bits, and when the initialization result is success, the failure reason is represented by a field of enumerate type.

Corresponding to the above method example, an example of the present disclosure provides a sensing device. As shown in fig. 13, the sensing device comprises a processor 1301; a transceiver 1304; a machine-readable storage medium 1302 having stored therein machine-executable instructions that can be executed by the processor 1301; the machine-executable instructions cause the processor 1301 to:
send, through the transceiver 1304, a first request to a sensing server, wherein the first request is to request the sensing server to start a sensing service for a designated AP, and the sensing service of the sensing server is to receive measurement data reported by the designated AP and obtain a sensing result based on the measurement data;
receive, through the transceiver 1304, a first response sent by the sensing server with respect to the first request;
send, through the transceiver 1304, a second request to the designated AP when the first response includes a success indication, wherein the second request is to inform the designated AP to start the sensing service, and the second request comprises information of a designated STA(s) bound to the designated AP and information of the sensing server, and the sensing service of the designated AP is to, after obtaining the measurement data by performing signal measurement on a sensing signal sent by the designated STA(s), report the measurement data;
receive, through the transceiver 1304, a second response sent by the designated AP with respect to the second request;
send, through the transceiver 1304, a third request to the designated STA(s) when the second response includes a success indication, wherein the third request is to inform the designated STA(s) to send the sensing signal to the designated AP;
receive, through the transceiver 1304, a third response sent by the designated STA(s) with respect to the third request;
start receiving, through the transceiver 1304, the sensing result sent by the sensing server when the third response includes a success indication.

Optionally, the machine-executable instructions further cause the processor 1301 to perform the following blocks:
send, through the transceiver 1304, a first update request to the sensing server if information of the designated AP is updated, wherein the first update request comprises updated information of the designated AP;
receive, through the transceiver 1304, a first update response sent by the sensing server with respect to the first update request, wherein the first update response is to indicate whether the sensing server has been updated successfully.

Optionally, the machine-executable instructions further cause the processor 1301 to perform the following blocks:
send, through the transceiver 1304, a second update request to the designated AP if the information of the designated STA(s) bound to the designated AP or the information of the sensing server is updated, wherein the second update request includes updated information of the designated STA(s) bound to the designated AP and/or updated information of the sensing server;
receive, through the transceiver 1304, a second update response sent by the designated AP with respect to the second update request, wherein the second update response is to indicate whether the designated AP is updated successfully.

Optionally, the third request further includes a designated packet sending rate; the machine-executable instructions also cause the processor 1301 to perform the following blocks:
send, through the transceiver 1304, a third update request to the designated STA(s) if the information of the designated AP bound to the designated STA(s) or the designated packet sending rate is updated, wherein the third update request includes updated information of the designated AP bound to the designated STA(s) and/or an updated designated packet sending rate;
receive, through the transceiver 1304, a third update response sent by the designated STA(s) with respect to the third update request, wherein the third update response is to indicate whether the designated STA(s) has been updated successfully.

Optionally, the machine-executable instructions further cause the processor 1301 to perform the following blocks:
send, through the transceiver 1304, a first initialization request to the sensing server, wherein the first initialization request is to request the sensing server to start a sensing initialization service for the designated AP, and the sensing initialization service of the sensing server is to receive the measurement data reported by the designated AP within an initialization time window and obtain a sensing initialization result based on the measurement data;
receive, through the transceiver 1304, a first initialization response sent by the sensing server with respect to the first initialization request;
send, through the transceiver 1304, a second initialization request to the designated AP when the first initialization response includes a success indication, wherein the second initialization request is to inform the designated AP to start the sensing initialization service, and the second initialization request comprises the information of the designated STA(s) bound to the designated AP and information of the sensing server, and the sensing initialization service of the designated AP is to, after obtaining the measurement data by performing signal measurement on a sensing signal sent by the designated STA(s), report the measurement data to the sensing server;
receive, through the transceiver 1304, a second initialization response sent by the designated AP with respect to the second initialization request;
send, through the transceiver 1304, a third initialization request to the designated STA(s) when the second initialization response includes a success indication, wherein the third initialization request is to inform the designated STA(s) to start sending the sensing signal to the designated AP;
receive, through the transceiver 1304, a third initialization response sent by the designated STA(s) with respect to the third initialization request;
receive, through the transceiver 1304, the sensing initialization result sent by the sensing server when the third initialization response includes a success indication.

Optionally, the machine-executable instructions further cause the processor 1301 to perform the following blocks:
send, through the transceiver 1304, a first termination request to the sensing server, wherein the first termination request is to request the sensing server to terminate sensing the measurement data reported by the designated AP and to terminate reporting the sensing result to the sensing device;
receive, through the transceiver 1304, a first termination response sent by the sensing server with respect to the first termination request;
send, through the transceiver 1304, a second termination request to the designated AP, wherein the second termination request is to request the designated AP to stop measuring the sensing signal;
receive, through the transceiver 1304, a second termination response sent by the designated AP with respect to the second termination request;
send, through the transceiver 1304, a third termination request to the designated STA(s), wherein the third termination request is to request the designated STA(s) to stop sending the sensing signal;
receive, through the transceiver 1304, a third termination response sent by the designated STA(s) with respect to the third termination request.

Optionally, the first request, the first initialization request, the first update request and the first termination request are all sensing messages of a first type;
the sensing message of a first type comprises a message type, an initialization time window and information of a designated AP;
wherein, the message type occupies 4 bits, and indicates that the sensing message of a first type is: the first request when taking a value of a first value; the first update request when taking a value of a second value; the first initialization request when taking a value of a third value; and, the first termination request when taking a value of a fourth value;
the initialization time window occupies 4 bits, and takes a value of null in the event that the sensing message of a first type is not the first initialization request;
in the event that the designated AP is bound to a room, the sensing message of a first type further comprises a number of rooms and room information of each room, the information of the designated AP is located in the room information of the bound room, and the room information includes a room identifier, a reporting rate of the sensing server, a data type of measurement data, a number of designated APs in the room and information of each designated AP; wherein, the number of rooms occupies 8 bits, the room identifier occupies 16 bits, the reporting rate of the sensing server and the data type of the measurement data each occupy 4 bits, and the values of the reporting rate of the sensing server and the data type of the measurement data are null in the event that the sensing message of a first type is the first initialization request or the first termination request; the number of designated APs in the room occupies 8 bits; the information of each designated AP in the room includes a MAC address of the AP and a sampling rate of measurement data by the AP, wherein the MAC address of the AP occupies 48 bits, and the sampling rate of measurement data by the AP occupies 4 bits, and the sampling rate of measurement data by the AP in the room takes a value of null when the sensing message of a first type is the first termination request;
in the event that the designated AP is not bound to a room, the sensing message of a first type also comprises a number of designated APs, and the information of each designated AP includes a MAC address of the AP, a reporting rate of the sensing server and a sampling rate of measurement data by the AP;
wherein, the number of the designated APs occupies 8 bits, the MAC address of the AP occupies 48 bits, and the reporting rate of the sensing server and the sampling rate of measurement data by the AP each occupy 4 bits; in the event that the sensing message of a first type is the first initialization request or the first termination request, the reporting rate of the sensing server takes a value of null; in the event that the sensing message of a first type is the first termination request, the sampling rate of the measurement data by the designated AP takes a value of null.

Optionally, the first response, the first initialization response, the first update response and the first termination response are all a sensing response messages of a first type;
the sensing response message of a first type includes a message type, a response result and a failure reason;
the message type occupies 4 bits and indicates that the sensing message of a first type is: the first response when taking a value of a first value; the first update response when taking a value of a second value; the first initialization response when taking a value of a third value; and, the first termination response when taking a value of a fourth value;
the response result occupies 1 bit and is either success or failure;
the failure reason occupies 3 bits, and when the response result is failure, the failure reason is represented by a field of enumerate type;
in the event that the sensing message of a first type is the first termination response, the failure reason takes a value of null.

Optionally, the second request, the second initialization request, the second update request and the second termination request are all sensing messages of a second type;
the sensing message of a second type comprises a message type, a data type, a sampling rate of measurement data, an IP address version of the sensing server, an IP address of the sensing server, a port number of the sensing server, the number of the designated STA(s)s and information of each designated STA(s);
wherein, when the sensing message of a second type is the second termination request, the data type, the sampling rate of measurement data, the IP address version of the sensing server, the IP address of the sensing server, the port number of the sensing server, the number of the designated STA(s)s and the information of each designated STA(s) are all take a value of null;
the message type and the data type each occupy 4 bits, the sampling rate of the measurement data occupies 3 bits, the IP address version of the sensing server occupies 1 bit, the IP address of the sensing server occupies 128 bits or 32 bits, and the port number of the sensing server occupies 16 bits;
the information of each designated STA(s) occupies 48 bits and comprises a MAC address of the STA.

Optionally, the second response, the second initialization response, the second update response and the second termination response are all sensing response messages of a second type;
the sensing response message of a second type comprises a message type, a response result, a failure reason and MAC address of the designated AP;
the message type occupies 4 bits, and indicates that the sensing response message of a second type is: the second response when taking a value of a first value; the second update response when taking a value of a second value; the second initialization response when taking a value of a third value; and, the second termination response when taking a value of a fourth value;
the response result occupies 1 bit and is either success or failure;
the failure reason occupies 3 bits, and when the response result is failure, is represented by a field of enumerate type;
in the event that the sensing message of a second type is the second termination response, the failure reason takes a value of null;
the MAC address of the designated AP occupies 48 bits.

Optionally, the third request, the third initialization request, the third update request and the third termination request are all sensing messages of a third type;
the sensing message of a third type includes a message type and a designated packet sending rate;
wherein, the message type occupies 4 bits, and indicates that the sensing message of a third type is: the third request when taking a value of a first value; the third update request when taking a value of a second value; the third initialization request when taking a value of a third value; and, the third termination request when taking a value of a fourth value;
the designated packet sending rate and the MAC address of the designated AP each occupy 4 bits, and in the event that the sensing message of a third type is the third termination request, the designated packet sending rate takes a value of null;
in the event that the sensing message of a third type is the third request, the third initialization request or the third update request, the sensing message of a third type further includes a MAC address of the designated AP, which occupies 48 bits.

Optionally, the third response, the third initialization response, the third update response and the third termination response are all sensing response messages of a third type;
the sensing response message of a third type includes a message type, a response result, a failure reason and a MAC address of the designated STA(s);
the message type occupies 4 bits, and indicates that the sensing response message of a third type is: the third response when taking a value of a first value; the third update response when taking a value of a second value; the third initialization response when taking a value of a third value; the third termination response when taking a value of a fourth value;
the response result occupies 1 bit and is either success or failure;
the failure reason occupies 3 bits, and when the response result is failure, the failure reason is represented by a field of enumerate type;
in the event that the sensing message of a third type is the third termination response, the failure reason takes a value of null.

Optionally, the measurement data reported by the designated AP is located in the sensing message of a fourth type;
the sensing message of a fourth type comprises a number of channel state information (CSI )samples and CSI samples;
each CSI sample comprises a CSI packet, which is a data structure of a structural type and is to carry CSI measurement data obtained by a single sampling of a sensing signal by the designated AP.

Optionally, the sensing result and the sensing initialization result are located in a sensing result message;
the sensing result message includes a message type, an initialization result and a failure reason;
the message type occupies 4 bits and indicates that the sensing result message is to carry: the sensing result when taking a value of a first value; and, the sensing initialization result when taking a value of a second value;
the initialization result occupies 1 bit and is either success or failure;
the failure reason occupies 3 bits, and when the initialization result is success, the failure reason is represented by a field of enumerate type;
in the event that the sensing result message is to carry the sensing result, the initialization result and the failure reason each take a value of null, and the sensing message of a fifth type also includes a number of sensing results and information of each sensing result;
the number of sensing results occupies 8 bits, and its maximum value is 256;
the information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

Optionally, the sensing result is located in a sensing result message, and the sensing result message includes a number of sensing results and each sensing result;
the number of sensing results occupies 8 bits, and its maximum value is 256;
information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

Optionally, the sensing initialization result is located in a sensing initialization result message;
the sensing initialization result message includes an initialization result and a failure reason;
the initialization result occupies 1 bit and is either success or failure;
the failure reason occupies 3 bits, and when the initialization result is success, the failure reason is represented by a field of enumerate type.

As shown in Fig. 13, the network device may further comprise a communication bus 1303. The processor 1301, the machine-readable storage medium 1302 and the transceiver 1304 communicate with each other via the communication bus 1303, which can be a Peripheral Component Interconnect (PCI) bus or an Extended Industry Standard Architecture (EISA) bus, or the like. The communication bus 1303 can be divided into an address bus, a data bus, a control bus and the like.

The transceiver 1304 can be a wireless communication module and performs data interaction with other devices under the control of the processor 1301.

The machine-readable storage medium 1302 may include a Random Access Memory (RAM) or a Non-Volatile Memory (NVM), such as at least one disk memory. In addition, the machine-readable storage medium 1302 can also be at least one storage device located away from the aforementioned processor.

The processor 1301 may be a general-purpose processor, comprising a Central Processing Unit (CPU) and a Network Processor (NP). It can also be a Digital Signal Processing (DSP), an Application Specific Integrated Circuit (ASIC), a Field-Programmable Gate Array (FPGA) or other programmable logic devices, discrete gate or transistor logic devices, and discrete hardware components.

Corresponding to the above method example, an example of the present disclosure further provides a sensing server. As shown in Fig. 14, the sensing server comprises:
a processor 1401;
a transceiver 1404;
a machine-readable storage medium 1402 having stored therein machine-executable instructions that can be executed by the processor 1401; wherein the machine-executable instructions cause the processor 1401 to:
   receive, through the transceiver 1404, a first request sent by a sensing device, wherein the first request is to request the sensing server to trigger a sensing service for a designated AP;
   send, through the transceiver 1404, a first response with respect to the first request to the sensing device;
   receive, through the transceiver 1404, measurement data reported by the designated AP when the first response includes a success indication, wherein the designated AP is bound to a designated STA(s), and the measurement data is obtained after the designated AP performs signal measurement on a sensing signal sent by the designated STA(s);
   report, through the transceiver 1404, a sensing result of the measurement data to the sensing device.

Optionally, in the event that a first sensing trigger result is failure, the first response includes a failure reason.

Optionally, the machine-executable instructions further cause the processor 1401 to:
receive, through the transceiver 1404, a first update request sent by the sensing device, wherein the first update request includes updated information of the designated AP;
send, through the transceiver 1404, a first update response with respect to the first update request to the sensing device, wherein the first update response is to indicate whether the sensing server has been updated successfully.

Optionally, the machine-executable instructions further cause the processor 1401 to:
receive, through the transceiver 1404, a first initialization request sent by the sensing device, wherein the first initialization request includes an initialization time window and information of the designated AP;
send, through the transceiver 1404, a first initialization response with respect to the first initialization request to the sensing device;
receive, through the transceiver 1404, the measurement data sent by the designated AP when the first initialization response includes a success indication, wherein the designated AP is bound to a designated STA(s), and the measurement data is obtained after the designated AP performs signal measurement on a sensing signal sent by the designated STA(s);
send, through the transceiver 1404, a sensing initialization result of the measurement data to the sensing device.

Optionally, the machine-executable instructions further cause the processor 1401 to:
receive, through the transceiver 1404, a first termination request sent by the sensing device, wherein the first termination request is to request the sensing server to terminate sensing the measurement data reported by the designated AP and to terminate reporting the sensing result to the sensing device;
send, through the transceiver 1404, a first termination response with respect to the first termination request to the sensing device.

Optionally, the first request, the first initialization request, the first update request and the first termination request are all sensing messages of a first type;
the sensing message of a first type includes a message type, the initialization time window and information of a designated AP;
wherein, the message type occupies 4 bits and indicates that the sensing message of a first type is: the first request when taking a value of a first value; the first update request when taking a value of a second value; the first initialization request when taking a value of a third value; and, the first termination request when taking a value of a fourth value;
the initialization time window occupies 4 bits, and takes a value of null in the event that the sensing message of a first type is not the first initialization request;
in the event that the designated AP is bound to a room, the sensing message of a first type further includes a number of rooms and room information of each room, and the information of the designated AP is located in the room information of the bound room, and the room information includes a room identifier, a reporting rate of the sensing server, a data type of measurement data, a number of designated APs in the room and information of each designated AP; wherein, the number of rooms occupies 8 bits, the room identifier occupies 16 bits, the reporting rate of the sensing server and the data type of the measurement data each occupy 4 bits, and the values of the reporting rate of the sensing server and the data type of the measurement data are null in the event that the sensing message of a first type is the first initialization request or the first termination request; the number of designated APs in the room occupies 8 bits; the information of each designated AP in the room includes a MAC address of the AP and sampling rate of the AP sampling the measurement data, wherein the MAC address of the AP occupies 48 bits, and the sampling rate of measurement data by the AP occupies 4 bits, and the sampling rate of measurement data by the AP in the room takes a value of null in the event that the sensing message of a first type is the first termination request;
in the event that the designated AP is not bound to a room, the sensing message of a first type also includes a number of designated APs, and the information of each designated AP includes a MAC address of the AP, the reporting rate of the sensing server and the sampling rate of measurement data by the AP;
wherein, the number of designated APs occupies 8 bits, the MAC address of the AP occupies 48 bits, and the reporting rate of the sensing server and the sampling rate of measurement data by the AP each occupy 4 bits; in the event that the sensing message of a first type is the first initialization request or the first termination request, the reporting rate of the sensing server takes a value of null; when the sensing message of a first type is the first termination request, the sampling rate of the measurement data by the designated AP takes a value of null.

Optionally, the first response, the first initialization response, the first update response and the first termination response are all a sensing response messages of a first type;
the sensing response message of a first type includes a message type, a response result and a failure reason;
the message type occupies 4 bits and indicates that the sensing message of a first type is: the first response when taking a value of a first value; the first update response when taking a value of a second value; the first initialization response when taking a value of a third value; and, the first termination response when taking a value of a fourth value;
the response result occupies 1 bit and is either success or failure;
the failure reason occupies 3 bits, and when the response result is failure, the failure reason is represented by a field of enumerate type;
in the event that the sensing message of a first type is the first termination response, the failure reason takes a value of null.

Optionally, the measurement data reported by the designated AP is located in the sensing message of a fourth type;
the sensing message of a fourth type includes a number of channel state information (CSI) samples and CSI samples;
each CSI sample includes a CSI packet, which is a data structure of structural type, and is to carry CSI measurement data obtained by a single sampling of a sensing signal by the designated AP.

Optionally, the sensing result and the sensing initialization result are located in a sensing result message;
the sensing result message includes a message type, an initialization result and a failure reason;
the message type occupies 4 bits and indicates that the sensing result message is to carry: the sensing result when taking a value of a first value; and, the sensing initialization result when taking a value of a second value;
the initialization result occupies 1 bit and is either success or failure;
the failure reason occupies 3 bits, and when the initialization result is success, the failure reason is represented by a field of enumerate type;
in the event that the sensing result message is to carry the sensing result, the initialization result and the failure reason each take a value of null, and the sensing message of a fifth type also comprises a number of sensing results and information of each sensing result;
the number of sensing results occupies 8 bits, and its maximum value is 256;
the information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

Optionally, the sensing result is located in a sensing result message, and the sensing result message includes a number of sensing results and each sensing result;
the number of sensing results occupies 8 bits, and its maximum value is 256;
information of each sensing result includes an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

Optionally, the sensing initialization result is located in a sensing initialization message;
the sensing initialization message includes an initialization result and a failure reason;
the initialization result occupies 1 bit and is either success or failure;
the failure reason occupies 3 bits, and when the initialization result is success, the failure reason is represented by a field of enumerate type.

As shown in Fig. 14, the network device may also include a communication bus 1403. The processor 1401, the machine-readable storage medium 1402 and the transceiver 1404 communicate with each other via the communication bus 1403, which can be a Peripheral Component Interconnect (PCI) bus or an Extended Industry Standard Architecture (EISA) bus or the like. The communication bus 1403 can be divided into an address bus, a data bus, a control bus and the like.

The transceiver 1404 can be a wireless communication module and performs data interaction with other devices under the control of the processor 1401.

The machine-readable storage medium 1402 may include a Random Access Memory (RAM) or a Non-Volatile Memory (NVM), such as at least one disk memory. In addition, the machine-readable storage medium 1402 can also be at least one storage device located away from the aforementioned processor.

The processor 1401 may be a general-purpose processor, comprising a Central Processing Unit (CPU) and a Network Processor (NP). It can also be a Digital Signal Processing (DSP), an Application Specific Integrated Circuit (ASIC), a Field-Programmable Gate Array (FPGA) or other programmable logic devices, discrete gate or transistor logic devices, and discrete hardware components.

Based on the same inventive concept, according to the method provided by the above examples of the present disclosure, an example of the present disclosure also provides a machine-readable storage medium having stored therein machine-executable instructions that can be executed by the processor. The machine executable instructions cause the processor to carry out the blocks of any of the above sensing methods.

In yet another example provided by the present disclosure, a computer program product containing instructions is also provided, which, when running on a computer, causes the computer to execute the blocks of any sensing method in the above examples.

It should be noted that in the present disclosure, relational terms such as first and second are only used to distinguish one entity or operation from another entity or operation, and do not necessarily require or imply that there is any such actual relationship or order between these entities or operations. Moreover, the terms "comprising", "comprising" or any other variation thereof are intended to cover non-exclusive inclusions, so that a process, method, article or device comprising a series of elements includes not only those elements, but also other elements not explicitly listed or elements inherent to such process, method, article or device. Without further restrictions, an element defined by the phrase "comprising one" does not exclude the existence of other identical elements in the process, method, article or device comprising the element.

## Claims

1. A sensing method performed by a sensing device, **characterized in that**, the method comprises:
sending (S301) a first request to a sensing server, wherein the first request is to request the sensing server to start a sensing service for one or more designated access point(s), AP(s), and the sensing service of the sensing server is to receive measurement data reported by the one or more designated AP(s) and obtain a sensing result based on the measurement data;
receiving (S302) a first response sent by the sensing server with respect to the first request, wherein the first response comprises a success or failure indication;
sending (S303) a second request to the one or more designated AP(s) when the first response comprises a success indication, wherein the second request is to inform the one or more designated AP(s) to start the sensing service, and the second request comprises information of one or more designated station(s), STA(s), bound to the one or more designated AP(s) and information of the sensing server, and the sensing service of the one or more designated AP(s) is to, after obtaining the measurement data by performing signal measurement on a sensing signal sent by the one or more designated STA(s), report the measurement data to the sensing server;
receiving (S304) a second response sent by the one or more designated AP(s) with respect to the second request;
sending (S305) a third request to the one or more designated STA(s) when the second response comprises a success indication, wherein the third request is to inform the one or more designated STA(s) to send the sensing signal to the one or more designated AP(s);
receiving a third response sent by the one or more designated STA(s) with respect to the third request;
starting receiving the sensing result sent by the sensing server when the third response comprises a success indication.

2. The method according to claim 1, wherein after starting receiving the sensing result sent by the sensing server, the method further comprises:
sending a first update request to the sensing server if information of the one or more designated AP(s) is updated, wherein the first update request comprises updated information of the one or more designated AP(s);
receiving a first update response sent by the sensing server with respect to the first update request, wherein the first update response is to indicate whether the sensing server has been updated successfully.

3. The method according to claim 2, wherein after starting receiving the sensing result sent by the sensing server, the method further comprises:
sending a second update request to the one or more designated AP(s) if the information of the one or more designated STA(s) bound to the one or more designated AP(s) or the information of the sensing server is updated, wherein the second update request comprises updated information of the one or more designated STA(s) bound to the one or more designated AP(s) and/or updated information of the sensing server;
receiving a second update response sent by the one or more designated AP(s) with respect to the second update request, wherein the second update response is to indicate whether the one or more designated AP(s) has been updated successfully;
wherein the third request further comprises a designated packet sending rate; after starting receiving the sensing result sent by the sensing server, the method further comprises:
sending a third update request to the one or more designated STA(s) if the information of the one or more designated AP(s) bound to the one or more designated STA(s) or the designated packet sending rate is updated, wherein the third update request comprises updated information of the one or more designated AP(s) bound to the one or more designated STA(s) and/or an updated designated packet sending rate;
receiving a third update response sent by the one or more designated STA(s) with respect to the third update request, wherein the third update response is to indicate whether the one or more designated STA(s) has been updated successfully.

4. The method according to claim 3, wherein before sending the first request to the sensing server, the method further comprises:
sending (S401) a first initialization request to the sensing server, wherein the first initialization request is to request the sensing server to start a sensing initialization service for the one or more designated AP(s), and the sensing initialization service of the sensing server is to receive the measurement data reported by the designated AP within an initialization time window and obtain a sensing initialization result based on the measurement data;
receiving (S402) a first initialization response sent by the sensing server with respect to the first initialization request;
sending (S403) a second initialization request to the one or more designated AP(s) when the first initialization response comprises a success indication, wherein the second initialization request is to inform the one or more designated AP(s) to start the sensing initialization service, the second initialization request comprises the information of the one or more designated STA(s) bound to the one or more designated AP(s) and the information of the sensing server, and the sensing initialization service of the one or more designated AP(s) is to, after obtaining the measurement data by performing signal measurement on a sensing signal sent by the one or more designated STA(s), report the measurement data to the sensing server;
receiving (S404) a second initialization response sent by the one or more designated AP(s) with respect to the second initialization request;
sending (S405) a third initialization request to the one or more designated STA(s) when the second initialization response comprises a success indication, wherein the third initialization request is to inform the one or more designated STA(s) to start sending the sensing signal to the one or more designated AP(s);
receiving (S406) a third initialization response sent by the one or more designated STA(s) with respect to the third initialization request;
receiving (S407) the sensing initialization result sent by the sensing server when the third initialization response comprises a success indication.

5. The method according to claim 4, wherein after starting receiving the sensing result sent by the sensing server, the method further comprises:
sending (S501) a first termination request to the sensing server, wherein the first termination request is to request the sensing server to terminate sensing the measurement data reported by the one or more designated AP(s) and to terminate reporting the sensing result to the sensing device;
receiving (S502) a first termination response sent by the sensing server with respect to the first termination request;
sending (S503) a second termination request to the one or more designated AP(s), wherein the second termination request is to request the one or more designated AP(s) to stop measuring the sensing signal;
receiving (S504) a second termination response sent by the one or more designated AP(s) with respect to the second termination request;
sending (S505) a third termination request to the one or more designated STA(s), wherein the third termination request is to request the one or more designated STA(s) to stop sending the sensing signal;
receiving (S506) a third termination response sent by the one or more designated STA(s) with respect to the third termination request.

6. The method according to claim 5, wherein the first request, the first initialization request, the first update request and the first termination request are all sensing messages of a first type;
the sensing message of a first type comprises a message type, an initialization time window and information of one or more designated AP(s);
in the event that the one or more designated AP(s) is bound to a room(s), the sensing message of a first type further comprises a number of rooms and room information of each room, the information of the one or more designated AP(s) is located in the room information of the bound room(s), and the room information comprises a room identifier, a reporting rate of the sensing server, a data type of measurement data, a number of designated APs in the room and information of each designated AP; in the event that the one or more designated AP(s) is not bound to a room(s), the sensing message of a first type also comprises a number of designated APs, and the information of each designated AP comprises a MAC address of the AP, a reporting rate of the sensing server and a sampling rate of measurement data by the AP;
wherein the first response, the first initialization response, the first update response and the first termination response are all sensing response messages of a first type;
the sensing response message of a first type comprises a message type, a response result and a failure reason.

7. The method according to claim 5, wherein the second request, the second initialization request, the second update request and the second termination request are all sensing messages of a second type;
the sensing message of a second type comprises a message type, a data type, a sampling rate of measurement data, an IP address version of the sensing server, an IP address of the sensing server, a port number of the sensing server, a number of designated STA(s) and information of each designated STA(s);
wherein, when the sensing message of a second type is the second termination request, the data type, the sampling rate of measurement data, the IP address version of the sensing server, the IP address of the sensing server, the port number of the sensing server, the number of designated STA(s) and the information of each designated STA(s) all take a value of null;
wherein the second response, the second initialization response, the second update response and the second termination response are all sensing response messages of a second type;
the sensing response message of a second type comprises a message type, a response result, a failure reason and a MAC address of the one or more designated AP(s).

8. The method according to claim 5, wherein the third request, the third initialization request, the third update request and the third termination request are all sensing messages of a third type;
the sensing message of a third type comprises a message type and a designated packet sending rate;
wherein the third response, the third initialization response, the third update response and the third termination response are all sensing response messages of a third type;
the sensing response message of a third type comprises a message type, a response result, a failure reason and a MAC address of the one or more designated STA(s).

9. A sensing method performed by a sensing server, **characterized in that**, the method comprises:
receiving (S601) a first request sent by a sensing device, wherein the first request is to request the sensing server to trigger a sensing service for one or more designated access point(s), AP(s);
sending (S602) a first response with respect to the first request to the sensing device, wherein the sensing server determines the number of the designated AP(s), and determines the total amount of computing resources and storage resources needed for a sensing task based on the amount of computing resources and storage resources needed for sensing measurement data reported by each AP; in response to the sensing server's current amount of computing resources being greater than or equal to the total amount of computing resources, and the sensing server's own current amount of storage resources being greater than or equal to the total amount of storage resources, the first response comprises a success indication indicating that sensing trigger has succeeded;
receiving (S603) measurement data reported by the one or more designated AP(s) when the first response comprises the success indication;
reporting (S604) a sensing result of the measurement data to the sensing device.

10. The method according to claim 9, wherein after reporting the sensing result to the sensing device, the method further comprises:
receiving a first update request sent by the sensing device, wherein the first update request comprises updated information of the one or more designated AP(s);
sending a first update response with respect to the first update request to the sensing device, wherein the first update response is to indicate whether the sensing server has been updated successfully;
wherein before receiving the first request sent by the sensing device, the method further comprises:
receiving a first initialization request sent by the sensing device, wherein the first initialization request comprises an initialization time window and information of the one or more designated AP(s);
sending a first initialization response with respect to the first initialization request to the sensing device;
receiving the measurement data sent by the one or more designated AP(s) when the first initialization response comprises a success indication;
sending a sensing initialization result of the measurement data to the sensing device;
wherein after reporting the sensing result to the sensing device, the method further comprises:
receiving a first termination request sent by the sensing device, wherein the first termination request is to request the sensing server to terminate sensing the measurement data reported by the one or more designated AP(s) and to terminate reporting the sensing result to the sensing device;
sending a first termination response with respect to the first termination request to the sensing device.

11. The method according to claim 1 or 9, wherein the sensing result is located in a sensing result message, and the sensing result message comprises a number of sensing results and each sensing result;
the number of sensing results occupies 8 bits, and its maximum value is 256;
information of each sensing result comprises an identifier of a room where the designated AP is located or a MAC address of the designated AP, and a sensing result corresponding to the identifier of the room or the designated AP;
the identifier of the room occupies 16 bits, the MAC address of the designated AP occupies 48 bits, and the sensing result corresponding to the identifier of the designated room or the designated AP occupies 8 bits.

12. The method according to claim 4 or 10, wherein the sensing initialization result is located in a sensing initialization message;
the sensing initialization message comprises an initialization result and a failure reason;
the initialization result occupies 1 bit and is either success or failure;
the failure reason occupies 3 bits, and when the initialization result is success, is represented by a field of enumerate type.

13. A sensing device, comprising:
a processor (1301);
a transceiver (1304);
a machine-readable storage medium (1302) having stored therein machine-executable instructions that can be executed by the processor (1301); wherein the machine-executable instructions cause the processor (1301) to carry out the method of any one of claims 1-8.

14. A sensing server, comprising:
a processor (1401);
a transceiver (1404);
a machine-readable storage medium (1402) having stored therein machine-executable instructions that can be executed by the processor (1401); wherein the machine-executable instructions cause the processor (1401) to carry out the method of any one of claims 9-12.

## Patentansprüche

1. Erfassungsverfahren, das von einer Erfassungsvorrichtung durchgeführt wird, **dadurch gekennzeichnet, dass** das Verfahren umfasst:
Senden (S301) einer ersten Anforderung an einen Erfassungsserver, wobei die erste Anforderung dazu dient, den Erfassungsserver aufzufordern, einen Erfassungsdienst für einen oder mehrere designierte Zugangspunkte, AP(s), zu starten, und der Erfassungsdienst des Erfassungsservers dazu dient, Messdaten zu empfangen, die von dem einen oder den mehreren designierten APs gemeldet werden, und basierend auf den Messdaten ein Erfassungsergebnis zu erhalten;
Empfangen (S302) einer ersten Antwort, die von dem Erfassungsserver in Bezug auf die erste Anforderung gesendet wurde, wobei die erste Antwort eine Erfolgs- oder Fehlschlagsanzeige umfasst;
Senden (S303) einer zweiten Anforderung an den einen oder die mehreren designierten APs, wenn die erste Antwort eine Erfolgsanzeige umfasst, wobei die zweite Anforderung dazu dient, den einen oder die mehreren designierten APs zu informieren, den Erfassungsdienst zu starten, und die zweite Anforderung Informationen einer oder mehrerer designierter Stationen, STA(s), die an den einen oder die mehreren designierten APs gebunden sind, und Informationen des Erfassungsservers umfasst, und der Erfassungsdienst des einen oder der mehreren designierten APs dazu dient, nach Erhalten der Messdaten durch Durchführen einer Signalmessung an einem Erfassungssignal, das von der einen oder den mehreren designierten STAs gesendet wurde, die Messdaten an den Erfassungsserver zu melden;
Empfangen (S304) einer zweiten Antwort, die von dem einen oder den mehreren designierten APs in Bezug auf die zweite Anforderung gesendet wurde;
Senden (S305) einer dritten Anforderung an die eine oder mehreren designierten STAs, wenn die zweite Antwort eine Erfolgsanzeige umfasst, wobei die dritte Anforderung dazu dient, die eine oder mehreren designierten STAs zu informieren, das Erfassungssignal an den einen oder die mehreren designierten APs zu senden;
Empfangen einer dritten Antwort, die von der einen oder den mehreren designierten STAs in Bezug auf die dritte Anforderung gesendet wurde;
Starten des Empfangens des von dem Erfassungsserver gesendeten Erfassungsergebnisses, wenn die dritte Antwort eine Erfolgsanzeige umfasst.

2. Verfahren nach Anspruch 1, wobei nach Beginn des Empfangens des von dem Erfassungsserver gesendeten Erfassungsergebnisses das Verfahren ferner umfasst:
Senden einer ersten Aktualisierungsanforderung an den Erfassungsserver, wenn Informationen des einen oder der mehreren designierten APs aktualisiert werden, wobei die erste Aktualisierungsanforderung aktualisierte Informationen des einen oder der mehreren designierten APs umfasst;
Empfangen einer ersten Aktualisierungsantwort, die von dem Erfassungsserver in Bezug auf die erste Aktualisierungsanforderung gesendet wurde, wobei die erste Aktualisierungsantwort dazu dient, anzugeben, ob der Erfassungsserver erfolgreich aktualisiert wurde.

3. Verfahren nach Anspruch 2, wobei nach Beginn des Empfangs des von dem Erfassungsserver gesendeten Erfassungsergebnisses das Verfahren ferner umfasst:
Senden einer zweiten Aktualisierungsanforderung an den einen oder die mehreren designierten APs, wenn die Informationen der einen oder der mehreren designierten STAs, die an den einen oder die mehreren designierten APs gebunden sind, oder die Informationen des Erfassungsservers aktualisiert werden, wobei die zweite Aktualisierungsanforderung aktualisierte Informationen der einen oder der mehreren designierten STAs, die an den einen oder die mehreren designierten APs gebunden sind, und/oder aktualisierte Informationen des Erfassungsservers umfasst;
Empfangen einer zweiten Aktualisierungsantwort, die von dem einen oder den mehreren designierten APs in Bezug auf die zweite Aktualisierungsanforderung gesendet wurde, wobei die zweite Aktualisierungsantwort dazu dient, anzugeben, ob der eine oder die mehreren designierten APs erfolgreich aktualisiert wurde/wurden;
wobei die dritte Anforderung ferner eine designierte Paketsenderate umfasst; wobei nach Beginn des Empfangs des von dem Erfassungsserver gesendeten Erfassungsergebnisses das Verfahren ferner umfasst:
Senden einer dritten Aktualisierungsanforderung an die eine oder die mehreren designierten STAs, wenn die Informationen des einen oder der mehreren designierten APs, die an die eine oder die mehreren designierten STAs gebunden sind, oder die designierte Paketsenderate aktualisiert wird, wobei die dritte Aktualisierungsanforderung aktualisierte Informationen des einen oder der mehreren designierten APs, die an die eine oder die mehreren designierten STAs gebunden sind, und/oder eine aktualisierte designierte Paketsenderate umfasst;
Empfangen einer dritten Aktualisierungsantwort, die von der einen oder den mehreren designierten STAs in Bezug auf die dritte Aktualisierungsanforderung gesendet wurde, wobei die dritte Aktualisierungsantwort dazu dient, anzugeben, ob die eine oder die mehreren designierten STAs erfolgreich aktualisiert wurde/wurden.

4. Verfahren nach Anspruch 3, wobei das Verfahren vor dem Senden der ersten Anforderung an den Erfassungsserver ferner umfasst:
Senden (S401) einer ersten Initialisierungsanforderung an den Erfassungsserver, wobei die erste Initialisierungsanforderung dazu dient, den Erfassungsserver aufzufordern, einen Erfassungsinitialisierungsdienst für den einen oder die mehreren designierten APs zu starten, und der Erfassungsinitialisierungsdienst des Erfassungsservers dazu dient, die von dem designierten AP innerhalb eines Initialisierungszeitfensters gemeldeten Messdaten zu empfangen und basierend auf den Messdaten ein Erfassungsinitialisierungsergebnis zu erhalten;
Empfangen (S402) einer ersten Initialisierungsantwort, die von dem Erfassungsserver in Bezug auf die erste Initialisierungsanforderung gesendet wurde;
Senden (S403) einer zweiten Initialisierungsanforderung an den einen oder die mehreren designierten APs, wenn die erste Initialisierungsantwort eine Erfolgsanzeige umfasst, wobei die zweite Initialisierungsanforderung dazu dient, den einen oder die mehreren designierten APs darüber zu informieren, den Erfassungsinitialisierungsdienst zu starten, die zweite Initialisierungsanforderung die Informationen der einen oder der mehreren designierten STAs, die an den einen oder die mehreren designierten APs gebunden sind, und die Informationen des Erfassungsservers umfasst, und der Erfassungsinitialisierungsdienst des einen oder der mehreren designierten APs dazu dient, nach Erhalten der Messdaten durch Durchführen einer Signalmessung an einem Erfassungssignal, das von der einen oder den mehreren designierten STAs gesendet wurde, die Messdaten an den Erfassungsserver zu melden;
Empfangen (S404) einer zweiten Initialisierungsantwort, die von dem einen oder den mehreren designierten APs in Bezug auf die zweite Initialisierungsanforderung gesendet wurde;
Senden (S405) einer dritten Initialisierungsanforderung an die eine oder die mehreren designierten STAs, wenn die zweite Initialisierungsantwort eine Erfolgsanzeige umfasst, wobei die dritte Initialisierungsanforderung dazu dient, die eine oder die mehreren designierten STAs darüber zu informieren, mit dem Senden des Erfassungssignals an den einen oder die mehreren designierten APs zu beginnen;
Empfangen (S406) einer dritten Initialisierungsantwort die von der einen oder den mehreren designierten STAs in Bezug auf die dritte Initialisierungsanforderung gesendet wurde;
Empfangen (S407) des Erfassungsinitialisierungsergebnisses, das von dem Erfassungsserver gesendet wurde, wenn die dritte Initialisierungsantwort eine Erfolgsanzeige umfasst.

5. Verfahren nach Anspruch 4, wobei nach Beginn des Empfangs des von dem Erfassungsserver gesendeten Erfassungsergebnisses das Verfahren ferner umfasst:
Senden (S501) einer ersten Beendigungsanforderung an den Erfassungsserver, wobei die erste Beendigungsanforderung dazu dient, den Erfassungsserver aufzufordern, das Erfassen der durch den einen oder die mehreren designierten APs gemeldeten Messdaten zu beenden und das Melden des Erfassungsergebnisses an die Erfassungsvorrichtung zu beenden;
Empfangen (S502) einer ersten Beendigungsantwort, die von dem Erfassungsserver in Bezug auf die erste Beendigungsantwort gesendet wurde;
Senden (S503) einer zweiten Beendigungsanforderung an den einen oder die mehreren designierten APs, wobei die zweite Beendigungsanforderung dazu dient, den einen oder die mehreren designierten APs aufzufordern, das Messen des Erfassungssignals zu beenden;
Empfangen (S504) einer zweiten Beendigungsantwort, die von dem einen oder den mehreren designierten APs in Bezug auf die zweite Beendigungsanforderung gesendet wurde;
Senden (S505) einer dritten Beendigungsanforderung an die eine oder die mehreren designierten STAs, wobei die dritte Beendigungsanforderung dazu dient, die eine oder die mehreren designierten STAs aufzufordern, das Senden des Erfassungssignals beenden;
Empfangen (S506) einer dritten Beendigungsantwort, die von der einen oder den mehreren designierten STAs in Bezug auf die dritte Beendigungsanforderung gesendet wurde.

6. Verfahren nach Anspruch 5, wobei die erste Anforderung, die erste Initialisierungsanforderung, die erste Aktualisierungsanforderung und die erste Beendigungsanforderung alle Erfassungsnachrichten eines ersten Typs sind;
die Erfassungsnachricht eines ersten Typs einen Nachrichtentyp, ein Initialisierungszeitfenster und Informationen eines oder mehrerer designierter APs umfasst;
für den Fall, dass der eine oder die mehreren designierten APs an einen Raum/Räume gebunden ist/sind, die Erfassungsnachricht eines ersten Typs ferner eine Anzahl von Räumen und eine Rauminformation jedes Raums umfasst, wobei sich die Informationen des einen oder der mehreren designierten APs in den Rauminformationen des gebundenen Raums/der gebundenen Räume befinden, und die Rauminformationen eine Raumkennung, eine Melderate des Erfassungsservers, einen Datentyp von Messdaten, eine Anzahl von designierten APs in dem Raum und Informationen jedes designierten AP umfassen; für den Fall, dass der eine oder die mehreren designierten APs nicht an einen Raum/Räume gebunden ist/sind, die Erfassungsnachricht eines ersten Typs auch eine Anzahl von designierten APs umfasst, und die Informationen jedes designierten AP eine MAC-Adresse des AP, eine Melderate des Erfassungsservers und eine Abtastrate von Messdaten durch den AP umfasst;
wobei die erste Antwort, die erste Initialisierungsantwort, die erste Aktualisierungsantwort und die erste Beendigungsantwort alle Erfassungsantwortnachrichten eines ersten Typs sind;
die Erfassungsantwortnachricht eines ersten Typs einen Nachrichtentyp, ein Antwortergebnis und eine Fehlerschlagursache umfasst.

7. Verfahren nach Anspruch 5, wobei die zweite Anforderung, die zweite Initialisierungsanforderung, die zweite Aktualisierungsanforderung und die zweite Beendigungsanforderung alle Erfassungsnachrichten eines zweiten Typs sind;
die Erfassungsnachricht eines zweiten Typs einen Nachrichtentyp, einen Datentyp, eine Abtastrate von Messdaten, eine IP-Adressversion des Erfassungsservers, eine IP-Adresse des Erfassungsservers, eine Portnummer des Erfassungsservers, eine Anzahl designierter STA(s) und Informationen jeder designierten STA(s) umfasst;
wobei, wenn die Erfassungsnachricht eines zweiten Typs die zweite Beendigungsanforderung ist, der Datentyp, die Abtastrate von Messdaten, die IP-Adressversion des Erfassungsservers, die IP-Adresse des Erfassungsservers, die Portnummer des Erfassungsservers, die Anzahl von designierten STA(s) und die Informationen jeder designierten STA(s) alle einen Wert von Null annehmen;
wobei die zweite Antwort, die zweite Initialisierungsantwort, die zweite Aktualisierungsantwort und die zweite Beendigungsantwort alle Erfassungsantwortnachrichten eines zweiten Typs sind;
die Erfassungsantwortnachricht eines zweiten Typs einen Nachrichtentyp, ein Antwortergebnis, eine Fehlschlagursache und eine MAC-Adresse des einen oder der mehreren designierten APs umfasst.

8. Verfahren nach Anspruch 5, wobei die dritte Anforderung, die dritte Initialisierungsanforderung, die dritte Aktualisierungsanforderung und die dritte Beendigungsanforderung alle Erfassungsnachrichten eines dritten Typs sind;
die Erfassungsnachricht eines dritten Typs einen Nachrichtentyp und eine designierte Paketsenderate umfasst;
wobei die dritte Antwort, die dritte Initialisierungsantwort, die dritte Aktualisierungsantwort und die dritte Beendigungsantwort alle Erfassungsantwortnachrichten eines dritten Typs sind;
die Erfassungsantwortnachricht eines dritten Typs einen Nachrichtentyp, ein Antwortergebnis, eine Fehlschlagursache und eine MAC-Adresse der einen oder mehreren designierten STAs umfasst.

9. Erfassungsverfahren, das von einem Erfassungsserver durchgeführt wird, **dadurch gekennzeichnet, dass** das Verfahren umfasst:
Empfangen (S601) einer ersten Anforderung, die von einer Erfassungsvorrichtung gesendet wurde, wobei die erste Anforderung dazu dient, den Erfassungsserver aufzufordern, einen Erfassungsdienst für einen oder mehrere designierte Zugangspunkte, AP(s), auszulösen;
Senden (S602) einer ersten Antwort in Bezug auf die erste Anforderung an die Erfassungsvorrichtung, wobei der Erfassungsserver die Anzahl des/der designierten AP(s) bestimmt und die Gesamtmenge an Rechenressourcen und Speicherressourcen, die für eine Erfassungsaufgabe benötigt werden, basierend auf der Menge an Rechenressourcen und Speicherressourcen bestimmt, die für von jedem AP gemeldete Erfassungsmessdaten benötigt werden; als Reaktion darauf, dass die aktuelle Menge an Rechenressourcen des Erfassungsservers größer als oder gleich der Gesamtmenge an Rechenressourcen ist und die eigene aktuelle Menge an Speicherressourcen des Erfassungsservers größer als oder gleich der Gesamtmenge an Speicherressourcen ist, die erste Antwort eine Erfolgsanzeige umfasst, die anzeigt, dass der Erfassungsauslöser erfolgreich war;
Empfangen (S603) von Messdaten, die von dem einen oder den mehreren designierten APs gemeldet wurden, wenn die erste Antwort die Erfolgsanzeige umfasst;
Melden (S604) eines Erfassungsergebnisses der Messdaten an die Erfassungsvorrichtung.

10. Verfahren nach Anspruch 9, wobei das Verfahren nach dem Melden des Erfassungsergebnisses an die Erfassungsvorrichtung ferner umfasst:
Empfangen einer ersten Aktualisierungsanforderung, die von der Erfassungsvorrichtung gesendet wurde, wobei die erste Aktualisierungsanforderung aktualisierte Informationen des einen oder der mehreren designierten APs umfasst;
Senden einer ersten Aktualisierungsantwort in Bezug auf die erste Aktualisierungsanforderung an die Erfassungsvorrichtung, wobei die erste Aktualisierungsantwort dazu dient, anzugeben, ob der Erfassungsserver erfolgreich aktualisiert wurde;
wobei vor dem Empfangen der von der Sensorvorrichtung gesendeten ersten Anforderung das Verfahren ferner umfasst:
Empfangen einer ersten Initialisierungsanforderung, die von der Erfassungsvorrichtung gesendet wurde, wobei die erste Initialisierungsanforderung ein Initialisierungszeitfenster und Informationen des einen oder der mehreren designierten APs umfasst;
Senden einer ersten Initialisierungsantwort in Bezug auf die erste Initialisierungsanforderung an die Erfassungsvorrichtung;
Empfangen der Messdaten, die von dem einen oder den mehreren designierten APs gesendet wurden, wenn die erste Initialisierungsantwort eine Erfolgsanzeige umfasst;
Senden eines Erfassungsinitialisierungsergebnisses der Messdaten an die Erfassungsvorrichtung;
wobei nach dem Melden des Erfassungsergebnisses an die Erfassungsvorrichtung das Verfahren ferner umfasst:
Empfangen einer ersten Beendigungsanforderung, die von der Erfassungsvorrichtung gesendet wurde, wobei die erste Beendigungsanforderung dazu dient, den Erfassungsserver aufzufordern, das Erfassen der Messdaten, die von dem einen oder den mehreren designierten APs gemeldet werden, zu beenden und das Melden des Erfassungsergebnisses an die Erfassungsvorrichtung zu beenden;
Senden einer ersten Beendigungsantwort in Bezug auf die erste Beendigungsanforderung an die Erfassungsvorrichtung.

11. Verfahren nach Anspruch 1 oder 9, wobei sich das Erfassungsergebnis in einer Erfassungsergebnisnachricht befindet und die Erfassungsergebnisnachricht eine Anzahl von Erfassungsergebnissen und jedes Erfassungsergebnis umfasst;
die Anzahl der Erfassungsergebnisse 8 Bits belegt, und ihr maximaler Wert 256 beträgt;
Informationen jedes Erfassungsergebnisses eine Kennung eines Raums, in dem sich der designierte AP befindet, oder eine MAC-Adresse des designierten AP, und ein Erfassungsergebnis, das der Kennung des Raums oder des designierten AP entspricht, umfasst;
die Kennung des Raums 16 Bits belegt, die MAC-Adresse des designierten AP 48 Bits belegt und das Erfassungsergebnis, das der Kennung des designierten Raums oder des designierten AP entspricht, 8 Bits belegt.

12. Verfahren nach Anspruch 4 oder 10, wobei sich das Erfassungsinitialisierungsergebnis in einer Erfassungsinitialisierungsnachricht befindet;
die Erfassungsinitialisierungsnachricht ein Initialisierungsergebnis und eine Fehlerursache umfasst;
das Initialisierungsergebnis 1 Bit belegt und entweder ein Erfolg oder ein Fehlschlag ist;
die Fehlschlagursache 3 Bits belegt und, wenn das Initialisierungsergebnis erfolgreich ist, durch ein Feld eines Aufzählungstyps dargestellt wird.

13. Erfassungsvorrichtung, umfassend:
einen Prozessor (1301);
einen Sendeempfänger (1304);
ein maschinenlesbares Speichermedium (1302), auf dem maschinenausführbare Anweisungen gespeichert sind, die durch den Prozessor (1301) ausgeführt werden können; wobei die maschinenausführbaren Anweisungen den Prozessor (1301) veranlassen, das Verfahren nach einem der Ansprüche 1-8 auszuführen.

14. Erfassungsserver, umfassend:
einen Prozessor (1401);
ein Sendeempfänger (1404);
ein maschinenlesbares Speichermedium (1402), auf dem maschinenausführbare Anweisungen gespeichert sind, die von dem Prozessor (1401) ausgeführt werden können; wobei die maschinenausführbaren Anweisungen den Prozessor (1401) veranlassen, das Verfahren nach einem der Ansprüche 9-12 auszuführen.

## Revendications

1. Procédé de détection réalisé par un dispositif de détection, **caractérisé en ce que**, le procédé comprend :
l'envoi (S301) d'une première demande à un serveur de détection, dans lequel la première demande sert à demander au serveur de détection de démarrer un service de détection pour un ou plusieurs points d'accès, AP, désignés, et le service de détection du serveur de détection sert à recevoir des données de mesure rapportées par le ou les AP désignés et à obtenir un résultat de détection sur la base des données de mesure ;
la réception (S302) d'une première réponse envoyée par le serveur de détection concernant la première demande, dans lequel la première réponse comprend une indication de succès ou d'échec ;
l'envoi (S303) d'une deuxième demande au ou aux AP désignés lorsque la première réponse comprend une indication de succès, dans lequel la deuxième demande sert à informer le ou les AP désignés de démarrer le service de détection, et la deuxième demande comprend des informations d'une ou plusieurs stations, STA, désignées, liées au ou aux AP désignés et des informations du serveur de détection, et le service de détection du ou des AP désignés sert, après l'obtention des données de mesure en réalisant une mesure de signal sur un signal de détection envoyé par la ou les STA désignées, à rapporter les données de mesure au serveur de détection ;
la réception (S304) d'une deuxième réponse envoyée par le ou les AP désignés concernant la deuxième demande ;
l'envoi (S305) d'une troisième demande à la ou aux STA désignées lorsque la deuxième réponse comprend une indication de succès, dans lequel la troisième demande sert à informer la ou les STA désignées d'envoyer le signal de détection au ou aux AP désignés ;
la réception d'une troisième réponse envoyée par la ou les STA désignées concernant la troisième demande ;
le démarrage de la réception du résultat de détection envoyé par le serveur de détection lorsque la troisième réponse comprend une indication de succès.

2. Procédé selon la revendication 1, dans lequel, après le démarrage de la réception du résultat de détection envoyé par le serveur de détection, le procédé comprend en outre :
l'envoi d'une première demande de mise à jour au serveur de détection si des informations du ou des AP désignés sont mises à jour, dans lequel la première demande de mise à jour comprend des informations mises à jour du ou des AP désignés ;
la réception d'une première réponse de mise à jour envoyée par le serveur de détection concernant la première demande de mise à jour, dans lequel la première réponse de mise à jour sert à indiquer si le serveur de détection a été mis à jour avec succès.

3. Procédé selon la revendication 2, dans lequel, après le démarrage de la réception du résultat de détection envoyé par le serveur de détection, le procédé comprend en outre :
l'envoi d'une deuxième demande de mise à jour au ou aux AP désignés si les informations de la ou des STA désignées liées au ou aux AP désignés ou les informations du serveur de détection sont mises à jour, dans lequel la deuxième demande de mise à jour comprend des informations mises à jour de la ou des STA désignées liées au ou aux AP désignés et/ou des informations mises à jour du serveur de détection ;
la réception d'une deuxième réponse de mise à jour envoyée par le ou les AP désignés concernant la deuxième demande de mise à jour, dans lequel la deuxième réponse de mise à jour sert à indiquer si le ou les AP désignés ont été mis à jour avec succès ;
dans lequel la deuxième demande comprend en outre un débit d'envoi de paquets désigné ; après le démarrage de la réception du résultat de détection envoyé par le serveur de détection, le procédé comprend en outre :
l'envoi d'une troisième demande de mise à jour à la ou aux STA désignées si les informations du ou des AP désignés liés à la ou aux STA désignées ou au débit d'envoi de paquets désigné sont mises à jour, dans lequel la troisième demande de mise à jour comprend des informations mises à jour du ou des AP désignés liés à la ou aux STA désignées et/ou un débit d'envoi de paquets désigné mis à jour ;
la réception d'une troisième réponse de mise à jour envoyée par la ou les STA désignées concernant la troisième demande de mise à jour, dans lequel la troisième réponse de mise à jour sert à indiquer si la ou les STA désignées ont été mises à jour avec succès.

4. Procédé selon la revendication 3, dans lequel, avant l'envoi de la première demande au serveur de détection, le procédé comprend en outre :
l'envoi (S401) d'une première demande d'initialisation au serveur de détection, dans lequel la première demande d'initialisation sert à demander au serveur de détection de démarrer un service d'initialisation de détection pour le ou les AP désignés, et le service d'initialisation de détection du serveur de détection sert à recevoir les données de mesure rapportées par l'AP désigné dans une fenêtre temporelle d'initialisation et à obtenir un résultat d'initialisation de détection sur la base des données de mesure ;
la réception (S402) d'une première réponse d'initialisation envoyée par le serveur de détection concernant la première demande d'initialisation ;
l'envoi (S403) d'une deuxième demande d'initialisation au ou aux AP désignés lorsque la première réponse d'initialisation comprend une indication de succès, dans lequel la deuxième demande d'initialisation sert à informer le ou les AP désignés de démarrer le service d'initialisation de détection, la deuxième demande d'initialisation comprend les informations de la ou des STA désignées liées au ou aux AP désignés et les informations du serveur de détection, et le service d'initialisation de détection du ou des AP désignés sert, après l'obtention des données de mesure en réalisant une mesure de signal sur un signal de détection envoyé par la ou les STA désignées, à rapporter les données de mesure au serveur de détection ;
la réception (S404) d'une deuxième réponse d'initialisation envoyée par le ou les AP désignés concernant la deuxième demande d'initialisation ;
l'envoi (S405) d'une troisième demande d'initialisation à la ou aux STA désignées lorsque la deuxième réponse d'initialisation comprend une indication de succès, dans lequel la troisième demande d'initialisation sert à informer la ou les STA désignées de démarrer l'envoi du signal de détection au ou aux AP désignés ;
la réception (S406) d'une troisième réponse d'initialisation envoyée par la ou les STA désignées concernant la troisième demande d'initialisation ;
la réception (S407) du résultat d'initialisation de détection envoyé par le serveur de détection lorsque la troisième réponse d'initialisation comprend une indication de succès.

5. Procédé selon la revendication 4, dans lequel, après le démarrage de la réception du résultat de détection envoyé par le serveur de détection, le procédé comprend en outre :
l'envoi (S501) d'une première demande d'achèvement au serveur de détection, dans lequel la première demande d'achèvement sert à demander au serveur de détection d'achever une détection des données de mesure rapportées par le ou les AP désignés et d'achever un rapport du résultat de détection au dispositif de détection ;
la réception (S502) d'une première réponse d'achèvement envoyée par le serveur de détection concernant la première demande d'achèvement ;
l'envoi (S503) d'une deuxième demande d'achèvement au ou aux AP désignés, dans lequel la deuxième demande d'achèvement sert à demander au ou aux AP désignés d'arrêter de mesurer le signal de détection ;
la réception (S504) d'une deuxième réponse d'achèvement envoyée par le ou les AP désignés concernant la deuxième demande d'achèvement ;
l'envoi (S505) d'une deuxième demande d'achèvement à la ou aux STA désignées, dans lequel la troisième demande d'achèvement sert à demander à la ou aux STA désignées d'arrêter d'envoyer le signal de détection ;
la réception (S506) d'une troisième réponse d'achèvement envoyée par la ou les STA désignées concernant la troisième demande d'achèvement.

6. Procédé selon la revendication 5, dans lequel la première demande, la première demande d'initialisation, la première demande de mise à jour et la première demande d'achèvement sont toutes des messages de détection d'un premier type ;
le message de détection d'un premier type comprend un type de message, une fenêtre temporelle d'initialisation et des informations d'un ou plusieurs AP désignés ;
dans le cas où le ou les AP désignés sont liés à une ou plusieurs pièces, le message de détection d'un premier type comprend en outre un nombre de pièces et des informations de chaque pièce, les informations du ou des AP désignés sont situées dans les informations de pièce de la ou des pièces liées, et les informations de pièce comprennent un identifiant de pièce, un débit de rapport du serveur de détection, un type de données de données de mesure, un nombre d'AP désignés dans la pièce et des informations de chaque AP désigné ; dans le cas où le ou les AP désignés ne sont pas liés à une ou plusieurs pièces, le message de détection d'un premier type comprend également un nombre d'AP désignés, et les informations de chaque AP désigné comprennent une adresse MAC de l'AP, un débit de rapport du serveur de détection et un débit d'échantillonnage de données de mesure par l'AP ;
dans lequel la première réponse, la première réponse d'initialisation, la première réponse de mise à jour et la première réponse d'achèvement sont toutes des messages de réponse de détection d'un premier type ;
le message de réponse de détection d'un premier type comprend un type de message, un résultat de réponse et une raison d'échec.

7. Procédé selon la revendication 5, dans lequel la deuxième demande, la deuxième demande d'initialisation, la deuxième demande de mise à jour et la deuxième demande d'achèvement sont toutes des messages de détection d'un deuxième type ;
le message de détection d'un deuxième type comprend un type de message, un type de données, un débit d'échantillonnage de données de mesure, une version d'adresse IP du serveur de détection, une adresse IP du serveur de détection, un numéro de port du serveur de détection, un nombre de STA désignées et des informations de chaque STA désignée ;
dans lequel, lorsque le message de détection d'un deuxième type est la deuxième demande d'achèvement, le type de données, le débit d'échantillonnage de données de mesure, la version d'adresse IP du serveur de détection, l'adresse IP du serveur de détection, le numéro de port du serveur de détection, le nombre de STA désignées et les informations de chaque STA désignée prennent tous une valeur nulle ;
dans lequel la deuxième réponse, la deuxième réponse d'initialisation, la deuxième réponse de mise à jour et la deuxième réponse d'achèvement sont toutes des messages de réponse de détection d'un deuxième type ;
le message de réponse de détection d'un deuxième type comprend un type de message, un résultat de réponse, une raison d'échec et une adresse MAC du ou des AP désignés.

8. Procédé selon la revendication 5, dans lequel la troisième demande, la troisième demande d'initialisation, la troisième demande de mise à jour et la troisième demande d'achèvement sont toutes des messages de détection d'un troisième type ;
le message de détection d'un troisième type comprend un type de message et un débit d'envoi de paquets désigné ;
dans lequel la troisième réponse, la troisième réponse d'initialisation, la troisième réponse de mise à jour et la troisième réponse d'achèvement sont toutes des messages de réponse de détection d'un troisième type ;
le message de réponse de détection d'un troisième type comprend un type de message, un résultat de réponse, une raison d'échec et une adresse MAC de la ou des STA désignées.

9. Procédé de détection réalisé par un serveur de détection, **caractérisé en ce que**, le procédé comprend :
la réception (S601) d'une première demande envoyée par un dispositif de détection, dans lequel la première demande sert à demander au serveur de détection de déclencher un service de détection pour un ou plusieurs points d'accès, AP, désignés ;
l'envoi (S602) d'une première réponse concernant la première demande au dispositif de détection, dans lequel le serveur de détection détermine le nombre du ou des AP désignés, et détermine la quantité totale de ressources informatiques et de ressources de stockage nécessaires pour une tâche de détection sur la base de la quantité de ressources informatiques et de ressources de stockage nécessaires pour détecter des données de mesure rapportées par chaque AP ; en réponse à la quantité actuelle de ressources informatiques du serveur de détection étant supérieure ou égale à la quantité totale de ressources informatiques, et à la quantité actuelle de ressources de stockage propre au serveur de détection étant supérieure ou égale à la quantité totale de ressources de stockage, la première réponse comprend une indication de réussite indiquant que le déclenchement de détection a réussi ;
la réception (S603) de données de mesure rapportées par le ou les AP désignés lorsque la première réponse comprend l'indication de succès ;
le rapport (S604) d'un résultat de détection des données de mesure au dispositif de détection.

10. Procédé selon la revendication 9, dans lequel, après le rapport du résultat de détection au dispositif de détection, le procédé comprend en outre :
la réception d'une première demande de mise à jour envoyée par le dispositif de détection, dans lequel la première demande de mise à jour comprend des informations mises à jour du ou des AP désignés ;
l'envoi d'une première réponse de mise à jour concernant la première demande de mise à jour au dispositif de détection, dans lequel la première réponse de mise à jour sert à indiquer si le serveur de détection a été mis à jour avec succès ;
dans lequel, avant la réception de la première demande envoyée par le dispositif de détection, le procédé comprend en outre :
la réception d'une première demande d'initialisation envoyée par le dispositif de détection, dans lequel la première demande d'initialisation comprend une fenêtre temporelle d'initialisation et des informations du ou des AP désignés ;
l'envoi d'une première réponse d'initialisation concernant la première demande d'initialisation au dispositif de détection ;
la réception des données de mesure envoyées par le ou les AP désignés lorsque la première réponse d'initialisation comprend une indication de succès ;
l'envoi d'un résultat d'initialisation de détection des données de mesure au dispositif de détection ;
dans lequel, après le rapport du résultat de détection au dispositif de détection, le procédé comprend en outre :
la réception d'une première demande d'achèvement envoyée par le dispositif de détection, dans lequel la première demande d'achèvement sert à demander au serveur de détection d'achever une détection des données de mesure rapportées par le ou les AP désignés et d'achever un rapport du résultat de détection au dispositif de détection ;
l'envoi d'une première réponse d'achèvement concernant la première demande d'achèvement au dispositif de détection.

11. Procédé selon la revendication 1 ou 9, dans lequel le résultat de détection est situé dans un message de résultat de détection, et le message de résultat de détection comprend un nombre de résultats de détection et chaque résultat de détection ;
le nombre de résultats de détection occupe 8 bits, et sa valeur maximale est de 256 ;
des informations de chaque résultat de détection comprennent un identifiant d'une pièce où se situe l'AP désigné ou une adresse MAC de l'AP désigné, et un résultat de détection correspondant à l'identifiant de la pièce ou de l'AP désigné ;
l'identifiant de la pièce occupe 16 bits, l'adresse MAC de l'AP désigné occupe 48 bits et le résultat de détection correspondant à l'identifiant de la pièce désignée ou de l'AP désigné occupe 8 bits.

12. Procédé selon la revendication 4 ou 10, dans lequel le résultat d'initialisation de détection se situe dans un message d'initialisation de détection ;
le message d'initialisation de détection comprend un résultat d'initialisation et une raison d'échec ;
le résultat de l'initialisation occupe 1 bit et est soit un succès, soit un échec ;
la raison d'échec occupe 3 bits et, lorsque le résultat de l'initialisation est un succès, elle est représentée par un champ de type énuméré.

13. Dispositif de détection, comprenant :
un processeur (1301) ;
un émetteur-récepteur (1304) ;
un support de stockage lisible par machine (1302) sur lequel sont stockées des instructions exécutables par machine qui peuvent être exécutées par le processeur (1301) ; dans lequel les instructions exécutables par machine amènent le processeur (1301) à mettre en œuvre le procédé selon l'une quelconque des revendications 1 à 8.

14. Serveur de détection, comprenant :
un processeur (1401) ;
un émetteur-récepteur (1404) ;
un support de stockage lisible par machine (1402) sur lequel sont stockées des instructions exécutables par machine qui peuvent être exécutées par le processeur (1401) ; dans lequel les instructions exécutables par machine amènent le processeur (1401) à mettre en œuvre le procédé selon l'une quelconque des revendications 9 à 12.
